(19) Europäisches Patentamt
European Patent Office
Office européen des brevets

(11) Publication number: 0 133 357
B1

(12) # EUROPEAN PATENT SPECIFICATION

(45) Date of publication of patent specification: 07.12.88

(51) Int. Cl.⁴: **C 08 L 81/06**, C 08 L 67/00, C 08 L 69/00, C 08 L 79/08, C 08 L 71/04, D 01 F 6/88

(21) Application number: 84305078.2

(22) Date of filing: 26.07.84

(54) **Polymer composition.**

(30) Priority: 27.07.83 GB 8320270

(43) Date of publication of application:
20.02.85 Bulletin 85/08

(45) Publication of the grant of the patent:
07.12.88 Bulletin 88/49

(84) Designated Contracting States:
AT BE CH DE FR IT LI NL SE

(56) References cited:
GB-A-1 506 910
US-A-4 108 926
US-A-4 292 151
US-A-4 348 500

(73) Proprietor: RAYCHEM LIMITED
Rolls House 7, Rolls Buildings Fetter Lane
London, EC4 1NL (GB)

(72) Inventor: Mascia, Liberato
58 Ashley Piece
Ramsbury Wiltshire (GB)

(74) Representative: Jay, Anthony William et al
Raychem Limited Intellectual Property Law
Department Faraday Road
Dorcan Swindon Wiltshire (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 133 357 B1

Courier Press, Leamington Spa, England.

## Description

This invention relates to a polymer composition comprising thermoplastic aromatic polymer material.

Thermoplastic aromatic polymers, by which is meant thermoplastic polymers having aromatic groups in the polymer backbone and having no two adjacent aliphatic carbon atoms in the polymer backbone, have high temperature performance and other characteristics which make them attractive as engineering polymers. However, thermoplastic aromatic polymers have the disadvantage of tending to craze or crack when exposed to solvents, and such polymers cannot usefully be cross-linked by electron beam radiation to provide heat recoverable materials.

The present invention is concerned with a polymer composition containing thermoplastic aromatic polymer material which can be cross-linked and has improved resistance to solvents while retaining to a useful degree the desirable characteristics of the aromatic polymer(s).

Accordingly, in one aspect, the invention provides a composition comprising a mixture of:

(A) substantially non-crystalline thermoplastic polysulphone, polyethersulphone or polyetherimide;

(B) aliphatic polymer material as a substantially continuous phase having a molecular weight of at least 10000, comprising one or more polymers selected from polyolefins, silicone elastomers, polyacrylate elastomers, fluoropolymers, hydrogenated polystyrene-diene block copolymers, linear thermoplastic polyesters, polyamides, thermoplastic polyurethanes and polyalkylene oxide elastomers;

(C) cross-linking agent capable of cross-linking the aliphatic polymer material (B), at least part of the cross-linking agent itself being incorporated in the resulting cross-links, comprising one or more materials selected from unsaturated esters of alkoxylated dihydric phenols, esterified bis-phenol epoxy resins, esterified epoxidised novolac resins, unsaturated imides, multifunctional acrylic monomers and telomers, multifunctional alkyl esters, and unsaturated urethane oligomers, 1,2-polybutadienes and acetylene terminated oligomers,

in proportions by weight, based on the total weight of the composition, of 40 to 90% of (A), 6 to 55% of (B), and 2 to 30% of (C).

The aromatic polymer material (A) may also be present as a substantially continuous phase.

Preferably the composition comprises, by weight based on the total weight of the composition, 55 to 80% of (A), 10 to 35% of (B), and 6 to 20% of (C). A proportion of 15 to 30% of (B) is especially preferred. Preferably the composition comprises a uniform mixture of aromatic and aliphatic polymers.

It is preferred that the cross-linking agent (C) is a monomer or oligomer having a molecular weight less than 20,000 and is capable of cross-linking the aliphatic polymer (B) when the composition is subjected to high energy electron beam radiation, gamma radiation or UV radiation. The cross-linking agent (C) preferably, but not essentially, has at least two aliphatically unsaturated reactive groups capable of reacting with the aliphatic polymer material (B). Preferably the reactive groups comprise double-bond unsaturation.

The cross-linking of the aliphatic polymer material (B) is preferably carried out to a degree resulting in at least 2% gel content, preferably at least 5% gel content, more preferably at least 8% gel, in the composition. Compositions containing at least 15% gel are especially preferred. The invention specifically includes compositions wherein the cross-linking agent (C) has been reacted with the aliphatic polymer (B) to give a cross-linked compositions, preferably by electron beam irradiation to a dose of up to 50 MRads, especially when in the form of an article which has been deformed to and is retained in a heat-recoverable state, for example in the form of a heat-recoverable filament.

The aromatic polymer material (a) specified for the present invention comprises one or more aromatic polymers which have, as aforesaid, aromatic groups in the polymer backbone and have no two adjacent aliphatic carbon atoms in the polymer backbone. This is distinguishable from the specified aliphatic polymer material (B), which comprises one or more polymers having at least two adjacent aliphatic carbon atoms in the polymer backbone repeat unit and/or having no aromatic groups in the polymer backbone. The polymers of both kinds will normally have molecular weights greatly in excess of 10,000, more usually in excess of 20,000.

The aromatic polymer material, aliphatic polymer material and cross-linking agent are now each described in more detail.

1. Aromatic Polymers

The requirement that the aromatic polymer be thermoplastic is intended to exclude phenolic resins and other thermosetting aromatic polymers.

The aromatic polymers are preferably amorphous glasses with glass transition temperature greater than 120°C (more usually between 140 and 230°C). In particular the term refers to those polymers that are commercially known as polycarbonates, polyarylates, polyphenylene ether, polysulphones, polyether sulphones, polyether imides.

Examples of such polymers follow.

a) *Polycarbonates* These are polymers having the general formula

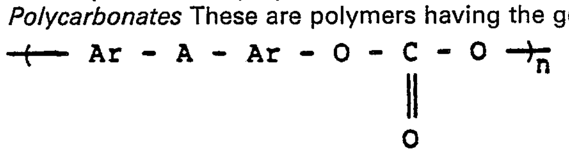

and

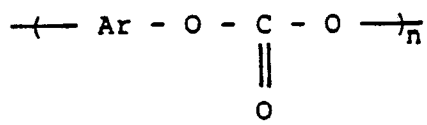

where:

*Ar* represents a phenylene, a diphenylene or alkyl, alkoxy, halogen, nitro substituted phenylene or diphenylene groups; and

*A* represents a methylene, or substituted methylene groups, such as

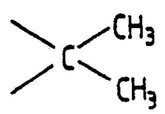
,
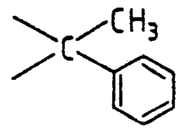

an imino, a sulphur, an oxygen, a sulphoxide, azo, sulphone, imide or carbonyl group.

The preferred polycarbonate is one where *Ar* is p-phenylene and *A* is isopropylidene.

Examples of polycarbonates and their method of preparation are given in U.S. Patent No. 2,964,794; 3,028,365; 3,187,065 and 3,215,668. One source of polycarbonates is from Messrs. ATO Chemical Products (U.K.) Ltd., sold under the trade name of ORGALAN.

b) *Polyarylates* These are aromatic polyesters produced from condensation reactions of a dihydric phenol and an aromatic dicarboxylic acid. The dihydric phenols have the general formula:

$$HO—Ar—A—Ar—OH$$

or

$$HO—Ar—OH$$

where:

*Ar* is either a phenylene, a diphenylene or alkyl, alkoxy, halogen, nitro substituted phenylene or diphenylene groups; and

*A* is a methylene or substituted methylene, such as

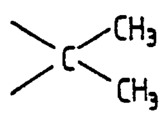
,
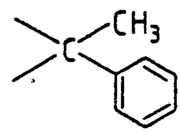

an imino, a sulphur, an oxygen, a sulphoxide, azo, sulphone, imide or carbonyl group.

The preferred polyarylate is one where *Ar* is p-phenylene and *A* is isopropylidene.

The aromatic dicarboxylic acids that may be used include terephthalic acid, isophthalic acid, any of the naphthalene dicarboxylic acids and mixtures thereof, as well as alkyl, halogen or nitro substituted homologs of these carboxylic acids.

Examples of the composition and methods of preparations of polyarylates are given in U.S. Patent No. 4,250,279. One source of polyarylates is Laporte Industries Ltd. sold under the trade name of ARYLEF.

c) *Polyphenylene ether* These polymers may be represented by the formula

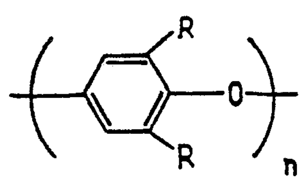

where

*R* is a monovalent substituent selected from the group consisting of hydrogen, halogen, hydrocarbon radicals free of a tertiary alpha-carbon atom, halohydrocarbon radicals free of a tertiary alpha-carbon atom, halohydrocarbon radicals having at least two carbon atoms between the halogen atom and the phenyl nucleus, hydrocarbonoxy radicals and halohydrocarbonoxy radicals having at least two carbon atoms between the halogen atom and the phenyl nucleus. A preferred type of polyphenylene ether is poly (2-6-dimethyl-1,4-phenylene)ether.

Examples of the composition and methods of preparation of polyphenylene ethers are given in U.S. Patent Nos. 3,306,874; 3,306,875; 3,257,357 and 3,257,358.

d) *Polysulphones* These polymers have the general formula

$$-\!\!(Ar—O—Ar'—SO_2—Ar'—O_n)\!\!-$$

where

*Ar* is the residuum of a dihydric phenol and Ar'—$SO_2$—Ar' is the residuum of a disubstituted diaryl sulphone compound.

The polysulphones are described in this manner as they are conveniently prepared by the reaction of an alkali metal double salt of a dihydric phenol and a dihalo-diaryl sulphone compound.

The residuum Ar of a dihydric phenol can be, for instance, a mononuclear phenylene group or a di- or polynuclear residuum.

The residuum Ar can also be substituted with other inert nuclear substituents such as halogen, alkyl or alkoxy groups.

It is preferred that the dihydric phenol be a weakly acidic dinuclear phenol such as for example, the dihydroxy diphenyl alkanes or the nuclear halogenated derivatives thereof, which are commonly known as "bis-phenols", such as, for example, the 2,2-bis-(4-hydroxy-phenyl)propane, 1,1-bis-(4-hydroxy-phenyl-2-phenylethane, bis-(4-hydroxyphenyl) methane, or the chlorinated derivatives containing one or two chlorine atoms on each aromatic ring.

The preferred bis-phenol for this class of polymers is 2,2-bis-(4-hydroxyphenyl) propane.

The residuum Ar'—SO2—Ar' derives preferably from 4,4' dichlorodiphenyl sulphone or 4,4' difluorodiphenyl sulphone. It is further preferred all the substituents on the Ar' nucleus are either hydrogen (zero-electron withdrawing) or other groups having a positive sigma* value, as set by J. F. Burnett in Chem. Rev. 49,273 (1951) and Quart. Rev. 12.1 (1958). Examples of the composition and preparation of polysulphones are given in U.S. Patent Nos. 3,554,972 and 3,375,297. One source of polysulphones is Union Carbide (U.K.) Ltd., sold under the trade name of UDEL.

e) *Polyethersulphones* These are polymers having the general formula

$$-\!(Ar-SO_2-Ar'-O)_n\!-$$

where

*Ar* is a phenylene or a diphenylene group; and

Ar' is a phenylene group.

Both Ar and Ar' may contain substituent groups, such as $SO_3H$, $SO_2Cl$, OH, $NO_2$, alkyl, or alkoxy.

The preferred formula is one where both *Ar* and *Ar'* are phenylene groups.

Examples of the compositions and methods of preparation of polyaryl sulphone are given in U.S. Patent No. 3,634,35 and British Patent No. 1,166,624. One source of polyether sulphones is Messrs. I.C.I. Ltd., sold under the trade name of Victrex.

f) *Polyaryletherimides* The polyether imides suitable for use in this invention are described in U.S. Patent No. 3,847,867; 3,838,097 and 4,1078,147. These have the following formula

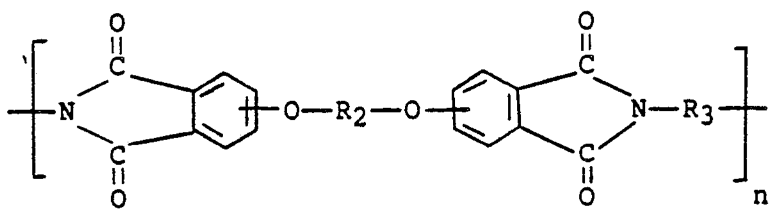

I

where

$OR_2O$ is attached to 3 or 4 and 3' or 4' positions and $R_2$ is selected from (*a*) substituted or unsubstituted aromatic radicals, such as

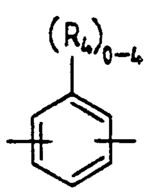

or

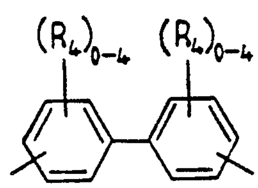

, or

(b) a divalent radical of the formula

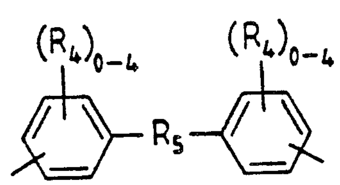

;

$R_4$ is independently $C_1$ to $C_6$ alkyl, or halogen;
$R_5$ is selected from —O—, —S—,

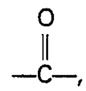

$SO_2$—, —SO—, alkylene of 1 to 6 carbon atoms, cycloalkylene of 4 to 8 carbon atoms, alkylidene of 1 to 6 carbon atoms or cycloalkylidene of 4 to 8 carbon atoms; and

$R_3$ is selected from an aromatic hydrocarbon radical having from 6—20 carbon atoms and halogenated derivatives thereof, or alkyl substituted derivative thereof, wherein the alkyl group contains 1 to 6 carbon atoms, alkylene and cycloalkylene radicals having from 2 to 20 carbon atoms, $C_2$—$C_8$ alkylene terminated polydiorganosiloxane and a divalent radical of the formula

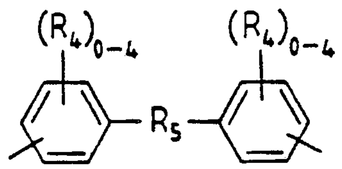

wherein $R_4$ and $R_5$ are as previously defined.

The polyetherimide of Formula I can be obtained by any of the methods well known to those skilled in the art including the reaction of any aromatic bis(ether anhydride)s of the formula

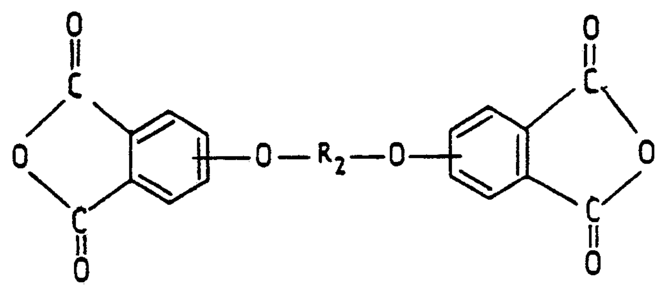

II

where $R_2$ is as defined previously with a diamino compound of the formula

$$H_2N—R_3—NH_2 \qquad \text{III}$$

where $R_3$ is as defined previously.

Included among the many methods of making the polyetherimides of Formula I are those disclosed in U.S. Patent Nos. 3,847,867; 3,847,869; 3,850,885; 3,852,242 and 3,855,178 etc.

The preferred polyetherimides include those of the formula

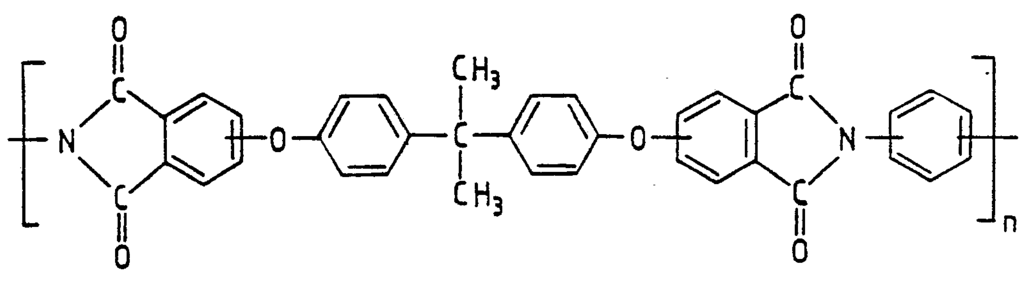

IV

One source of aromatic polyether imides is Messrs. General Electrical Company, sold under the trade name of ULTEM.

g) *Mixtures of Aromatic Polymers* Within the scope of this invention is included any mixture of the aromatic polymers described in a), b), c), d) and f) above. The aromatic polymer material may also be any of the above polymers in form of a block in a block copolymer. Usually, however, the aromatic polymer material is a separate, wholly aromatic polymer. Furthermore, small amounts of other thermoplastic aromatic polymers e.g. polyetherketone, polyphenylene sulphide and polyamideimides, may also be added as partial replacement (up to 25%) of the main aromatic polymer.

Aromatic polyetherketones are polymers having the following repeating units in the back-bone chain: Ar, >c=o and —o— in any combination, where *Ar* may be any mono-, di- or polynuclear aromatic divalent residue.

Examples of the preparation of polyetherketones are given in British Patent No. 971,227 and U.S. Patent Nos. 3,441,538 and 3,442,857.

Aromatic polyarylene sulphides are polymers containing the following repeating units in the backbone chains: Ar and —S—, where *Ar* may be any mono-, di- or polynuclear aromatic divalent residue.

One example is:

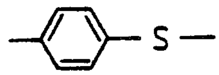

Examples of the preparation of polyarylene sulphides are given in U.S. Patent Nos. 3,354,129 and 3,699,087.

Aromatic polyamide-imides are polymers containing the following units in the back-bone chains.

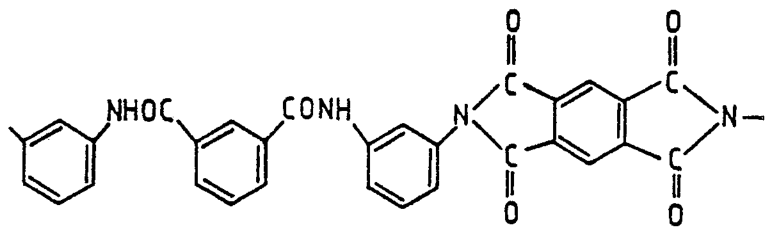

or

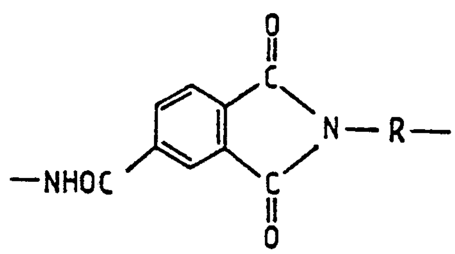

where *R* is an aromatic or an aliphatic group.

Examples of the preparation of polyamide-imides are given in Lee H., Stoffey D. and Neville K., New Linear Polymers, McGraw Hill (1967), Chapter 7.

2. ALIPHATIC POLYMERS

The polymers used as the aliphatic polymer material (B) are preferably melt processable, and are selected for (i) their ability to survive the compounding and processing thermal treatment without undergoing excessive decomposition, and (ii) their ability to undergo predominantly cross-linking reactions over chain-scission reactions under electron beam irradiation. Suitable polymers can readily be selected, as described below.

The nature of the aliphatic polymer can affect the characteristics of the preferred interpenetrating co-continuous phases. A coarse net-work produces blends that are either intrinsically more brittle or will embrittle more easily on subsequent ageing. For instance, polymers such as polyvinyl chloride, polybutadiene etc., would degrade too rapidly during melt compounding and subsequent processing. Other polymers, such as polymethyl methacrylate, polymethyl styrene, polytetrafluoethylene etc., would undergo predominantly chain scission reactions when subjected to high energy radiation.

The preferred aliphatic polymers for this invention are shown below:

a) *Polyolefins*

These are polymers based on ethylene or other olefins. The preferred polymers are those that are soft thermoplastic or rubbery at ambient temperatures. These include, therefore, the following:

highly branched polyethylene;

ethylene-vinyl acetate copolymers, where the molar concentration of the two components varies from 1% to 99%,

ethylene-alkyl (or alkoxy) acrylate copolymers and ethylene-methacylate copolymers (known as Ionomers), where the ethylene content is normally greater than 60%,

ethylene-propylene copolymers and terpolymers and their blends with linear or branched polyethylene or polyolefins,

chlorinated branched polyethylene

chlorosulphonated polyethylene, commercially available from Messrs. Du Pont Nemours under the trade name of HYPALON®.

b) *Silicone Elastomers*

These are polymers or copolymers containing the following repeating units

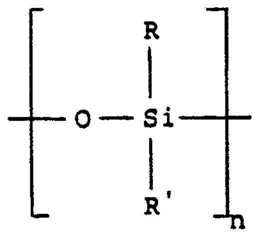

where *R* and *R'* are each independently either an alkyl, an alkoxy or an aryl group.

c) *Polyacrylate Elastomers*

These are homopolymers or copolymers of alkyl or alkoxy acrylates, often containing small amounts of termonomer units to provide sites for chemical cross-linking.

Within this class are included alternating acrylates-olefin copolymers, available commercially from Messrs. Du Pont de Nemours under the trade name of VAMAC®. This polymer is also believed to contain an acidic termonomer to provide sites for chemical crosslinking. Examples of the constitution and preparation of said alternating copolymers are given in U.K. Patent No. 1,548,232.

d) *Fluoropolymers*

These are essentially fluorine substituted polyolefins. The fluoropolymers that are most suitable for this invention are:

homopolymers, copolymers and terpolymers of vinyledene fluoride,
copolymers of olefins with terfluoroethylene,
homopolymers and copolymers of chlorotrifluoroethylene,

e) *Hydrogenated polystyrene-diene block copolymers*

These are selectively hydrogenated polymers having an A—B—A block type structure. The more common types of structures before hydrogenations are:

polystyrene/polybutadiene/polystyrene,
polystyrene/polyisoprene/polystyrene,
poly-α-methyl styrene/polybutadiene/poly-α-methylstyrene,
poly-α-methyl styrene/polyisoprene/poly-α-methylstyrene.

It is understood that both A and B blocks may be either homopolymers or random copolymers as long as each block predominates in at least one class of the monomers characterising the blocks, and as long as in the A or B blocks predominate the monomer units sequence specified above.

When the monomer employed for the B blocks is butadiene it is preferred that between 35 and 55 mole percent in the block have 1,2 configuration. Thus when such a block is hydrogenated, the resulting product is a copolymer of ethylene and butene 1. If the conjugated diene is isoprene, the resulting hydrogenated product resembles an alternating copolymer of ethylene and propylene.

Hydrogenation of the precursor block copolymers is preferably carried out using a catalyst consisting of the products of an aluminium alkyl compound with Nickel or Cobalt carboxylates or alkoxides, under such conditions as to hydrogenate at least 80% of the aliphatic double bonds, while hydrogenating no more than about 25% of the aromatic double bonds.

f) *Linear (Thermoplastic) Polyesters*

There are two basic types of polyesters.

Type A are polymers produced from condensation reactions of an aliphatic glycol (or a mixture of aliphatic glycols) and an aromatic or aliphatic dicarboxylic acid (or a mixture of aromatic and/or aliphatic dicarboxylic acids).

Instead of the di-acid one can use either the lower alkyl ester or the acid halide or the anhydride derivatives, according to the methods well known in the art.

Type B are polymers produced from self condensation reactions of either an aliphatic α,ω-hydroxycarboxylic acid or its derivative such as the α,ω-hydroxy acid halide or the internal (cyclic) ester.

The general formulae for linear thermoplastic polyesters are:

Type A 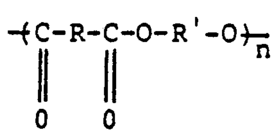

Type B 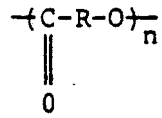

where

*R* is an aliphatic hydrocarbon radical with at least 2 carbon atoms in the chain for Type A and at least 3, preferably 5 or more, carbon atoms for Type B;

*R* can also be a mixture of aliphatic hydrocarbon radicals with varying amounts of carbon atoms in the chain;

*R'* is either an aromatic hydrocarbon radical, preferably a phenylene group, or an aliphatic hydrocarbon radical with at least 3 carbon atoms. *R'* can also be a mixture of aromatic and aliphatic hydrocarbon radicals.

Alternatively , and even more preferably, the linear thermoplastic polyester may be a block copolymer consisting of "hard" (semi-crystalline) polyester blocks and "soft" (amorphous) polyether or polyester blocks.

The structure of these polymers can be represented as follows:

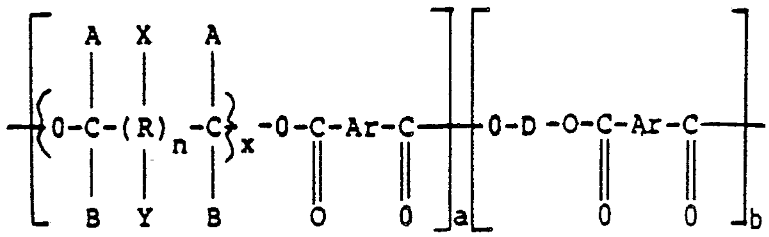

where

*x, a* and *b* are integers that may vary over a wide range, *n* is an integer varying from 0 to 10, preferably 2.

*Ar* is an aromatic hydrocarbon radical, preferably p-phenylene;

*D* is an aliphatic hydrocarbon radical, preferably a tetramethylene sequence; and

*X, Y, A* and *B* may be hydrogen, halogen or alkyl group *R* may be alkylene or cycloalkylene radical.

One commercial source of such polyester-polyether thermoplastics is Du Pont de Nemours, sold under the trade name of HYTREL®. According to K. H. Whitlock, De Nederlandse Rubberindustrie No. 16/1973, HYTREL polyesters are made from three ingredients, (i) dimethyl terephthalate, (ii) a polyglycol such as polytetramethylene ether glycol, polyethylene ether glycol or polypropylene ether glycol and (iii) a short chain diol such as butanediol or ethylene glycol.

Examples of composition and preparation of poly (ester-ether) block copolymers can be found in U.S. Patent Nos. 3,023,192; 3,651,014; 3,763,109; 3,766,146; 3,784,520 and Belgium Patent No. 793,332.

There are other variants to the type of polyetheresters that may be used in this invention. The polyester sequence in the block copolymers described above can be replaced, for instance, with monomeric ester sequences using procedures such as that described in British Patent No. 1,143,734.

g) *Aliphatic Polyamides*

These are condensation polymers containing recurring aliphatic amide groups along the backbone chains.

Polyamides may be obtained by polymerising an α,ω-amino acid or an internal (cyclic) lactam thereof, having at least 2 carbon atoms between the amino and carboxylic acid groups. Polyamides can also be obtained by polycondensation of substantially equimolecular proportions of a diamine and a diacarboxylic acid. The preparation of polyamides is well known in the art.

Examples of the said α,ω-amino carboxylic acids or lactams thereof include α,ω-amino caproic acid, butyrolactam, pivalolactam, caprolactam, caprylactam, enantholactam, undecanolactam and dodecanolactam.

Examples of said diamines are trimethylene diamine, tetramethylene diamine, pentamethylene diamine, dodecamethylene diamine, and especially hexamethylene diamine. C-alkylated diamines, e.g. 2,2-dimethyl pentamethylene diamine and 2,2,4- and 2,4,4-trimethylhexamethylene diamine are further examples.

Examples of the said dicarboxylic acids are sebacic acid, octa decanoic acid, suberic acid, azelaic acid, undecanedioc acid, glutaric acid, pimelic acid and especially adipic acid.

It is understood that in either type of polyamide some of the aliphatic units may be replaced by aromatic ones, and that a mixture of monomeric species containing a different number of carbon atoms may be used to produce random copolymers.

The latter are preferred materials for this invention in so far as they have a lower level of crystallinity and are softer at ambient temperatures.

Polyamides can also be produced as block copolymers, where the preferred block sequences are made up of aliphatic polyether units. Typical polyetheramides are described in French Patent No. 2,368,516. These are produced by reacting a polyamide having carboxylic acid end groups with an amine terminated polyether, which can be represented by the general formula.

$$NH_2(CH_2)_3—O—Y—(CH_2)_3NH_2$$

where Y is an aliphatic polyether having 2 to 12 carbon atoms between recurring oxygen atoms.

Within the family of polyamides used in this invention are included also the poly(ether-ester-amide) block copolymers.

These can be represented by the general formula

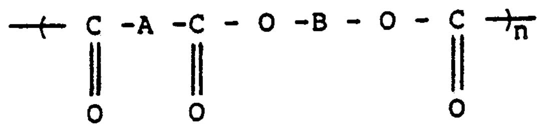

where A is a linear aliphatic polyamide sequence and B is a linear or branched aliphatic polyether block, the alkylene radical of which comprises at least 2 carbon atoms. Polymers of this type are described in U.S. Patent No. 4,207,410, British No's. 1,143,734; 2,015,012; 2,011,450; 2,005,285, 1,555,644; 1,558,882 and 1,473,972 and in French Patent No's. 2,386,582; 2,368,516; 2,362,180 and 2,299,357.

The synthesis and morphology of poly(ether-ester-amines) block copolymers are also described by G. Della Fortuna, A. Melis, G. Perego, R. Vitali and L. Zotteri in L'Industria della Gomma, 24, No. 5 (1980) pp. 49—52.

One commercial source of polyether amides block copolymers, possibly containing ester interlinks, is Grilon (UK) Ltd. under the trade name of ELY. Another source is ATO Chemical Products (UK) Ltd., sold under the trade name of PEBAX.

h) *Thermoplastic Polyurethanes*

The polyurethanes used in the present invention are essentially uncross-linked polyether- or polyester urethane block copolymers.

These are produced from reactions of the following:

(i) an essentially linear, hydroxyl terminated polyester of an aliphatic glycol having from 2 to 10 carbons and hydroxy terminal groups, and a compound selected from the group consisting of dicarboxylic acids of the following formula

$$HOOCRCOOR$$

where R is an alkylene radical having 2 to 8 carbon atoms, and the anhydrides of said acids;

(ii) an aromatic di-isocyanate; and

(iii) a saturated aliphatic glycol having from 2 to 6 carbon atoms and hydroxyl terminal groups.

Said reaction products should be essentially free of any unreacted isocyanate as exemplified in U.S. Patent No. 2,871,218.

The polyether urethanes are produced from reactions of the following:

(i) an hydroxyl terminated alkylene oxide,

(ii) an aromatic di-isocyanate; and

(iii) an aliphatic glycol having from 2 to 6 carbon atoms and hydroxyl terminal groups.

Preferred polyester urethanes to be used in the present invention comprise the reaction products of

(i) one or more hydroxyl terminated polyester selected from the group consisting of poly(1,4-butane adipate), poly(neopentyl azelate), poly(ethylene adipate), poly (1,4-butane phthlate), poly (1,6-hexane (neopentyl adipate), poly(neopentyl phthlate, poly 1,6-hexane azelate), poly (neopentyl phthlate poly (1,6-hexane azelate, polycaprolactones and poly(ethylene azelate);

(ii) aromatic diisocyanates selected from the group consisting of 2,4-toluene diisocyanate and diphenylmethane 4,4'-diisocyanate; and

(iii) saturated aliphatic glycols selected from the group consisting of ethylene glycol; propylene glycol; dipropylene glycol; tetramethylene glycol; .1,3-propanediol; 1,4-butanediol; 1,5-pentanediol and 1,6-hexanediol, including the poly α,ω-alkane diols thereof.

Preferred polyetherurethanes to be used comprise the reaction products of

(i) hydroxyl terminated poly(alkylene oxide) selected from the group consisting of polytetramethylene glycol and poly(propylene glycol);

(ii) said aromatic diisocyanate selected from the group consisting of 2,4-toluene diisocyanate and diphenyl methane 4,4'-diisocyanate; and

(iii) said aliphatic glycol selected from the group consisting of ethylene glycol; propylene glycol; dipropylene glycol; tetramethylene glycol; 1,3-propanediol and 1,4-butanediol; 1,5-pentanediol and 1,6-hexanediol, including the poly alpha-omega alkane diols thereof.

One method of preparation of polyurethanes disclosed herein is set forth in U.S. Patent No. 3,384,679.

One source of both polyester and polyether based polyurethanes is Messrs. Davathane Ltd., sold under the trade name of DAVATHANE.

i) *Poly(alkylene oxide) Elastomers*

These are homopolymers or copolymers containing the following units along the backbone chains

$$-\underset{\displaystyle R}{\overset{\displaystyle R'}{C}}-(CH_2)_x-O- \quad \text{and} \quad -\underset{\displaystyle Y}{CH}-(CH_2)_x-O-$$

where *x* is a number varying between 1 and 5;

*R* and *R'* are radicals from the series H, alkyl or unsaturated alkyl or alkoxy groups; and

*Y* is a radical from the series alkyl, unsaturated alkyl, unsaturated alkoxy or a halomethyl group.

The types of polyalkylene oxides suitable for this invention are as follows:

i) *Epihalohydrin Polymers*

These are polyethers containing halomethyl groups attached to the main polymer chain, as represented by the general formula

$$-\underset{\displaystyle CH_2X}{CH}-CH_2-O-$$

where X is a halogen elected from the group consisting of bromine, chlorine, fluorine or iodine.

Preferred epihalohydrin polymers include, for example, poly(epichlorohydrin). Alternatively, the epihalohydrin polymers may be copolymers comprising at least 50% epihalohydrin units, as described above, the remainder being one or more alkylene oxides, such as ethylene oxide, propylene oxide, butene oxide, etc, butadiene monoxide, cyclohexene oxide, vinyl cyclohexene oxide, epoxyethers such as ethyl glycidyl ether, allyl glycidyl ether and the like.

The epihalohydrin polymers useful in this invention are well known and available commercially. One source is Messrs. Goodrich Chemical (UK) Ltd., sold under the trade name of HYDRYN.

A more detailed description of these epihalohydrin polymers is found in U.S. Patent No. 3,026,270.

ii) *Polypropylene Oxide Elastomers*

These are copolymers of propylene oxide and an unsaturated monoepoxide derivative.

The more usual types of comonomers used for the production of these polymers are allyl glycidyl ether, butadiene oxide, vinyl cyclohexane monoxide and 1,2-epoxy-5,9-cyclodecadiene monoxide.

One source of propylene oxide elastomers is Messrs. Hercules Powder Company, sold under the trade name of PAREL, which is believed to be a copolymer of propylene oxide and allyl glycidyl ether.

Examples of compositions and methods of preparation of polypropylene oxide elastomers are given in US Patent Nos. 3,728,320 and 3,728,321.

j) *Mixtures of Aliphatic Polymers*

Within the scope of this invention is included any mixture of the aliphatic polymers described in a), b), c), d), e), f), g), h), i), above. The aliphatic polymer material may also be any of the above polymers in the form of a block in a block copolymer, the other block or blocks being any type of polymer capable of bonding with the aliphatic polymer material to form the copolymer.

In addition to these it is sometimes useful to partially replace the quantities of aliphatic polymer with a smaller amount, i.e. less than 50%, of a polyhydroxyether, particularly when the aliphatic polymer is a polyester, a polyamide or a polyurethane and the aromatic polymer is a polyaryl sulphone, as described earlier. Polyhydroxy ethers are compatible with both the said aromatic polymer and said aliphatic polymers and, therefore, produce compositions that are tougher than when they are omitted. The use of a polyhydroxyether also improves the resistance to solvent induced crazing. Polyhydroxyethers used in this invention are linear thermoplastic polymers having the general formula

$$(-O-Ar-O-R-)_n$$

where

*Ar* is the residuum of a dihydric phenol; and

*R* is a hydroxyl containing residuum of an epoxide, preferably an epihalohydrin

The polyhydroxyethers used in this invention are produced from the reaction of equimolecular proportions of 2,2-bis(4-hydroxy phenyl) propane and epichlorohydrin in the presence of sodium hydroxide. An example of the method of preparation of said polyhydroxyether is given in Example 2 of U.S. Patent No. 3,375,297.

3. Cross-linking Agents

The cross-linking agent (C) preferably comprises one or more materials selected from the following examples.

a) *Unsaturated esters of Alkoxylated Dihydric Phenols*

These can be represented by the general formula

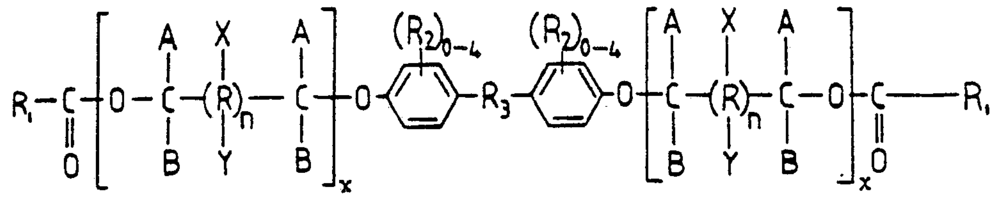

where

$R_1$ is an unsaturated aliphatic or aromatic hydrocarbon radical,

*A* or *B* are radicals from the group H, alkyl, alkoxy or halogen,

$R_2$ is independently either an alkyl group (from $C_1$ to $C_6$ or a halogen,

$R_3$ is selected from

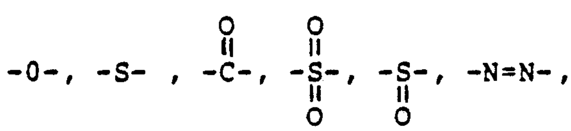

imide, alkylene of 1—6 carbon atoms, alkylidene of 1—6 carbon atoms, cycloalkylene of 4—8 carbon atoms or cycloalklidene of 4—8 carbon atoms,

x is an integer varying from a wide range, preferably from 1 to 2;

n is an integer varying from 0 to 10,

X, Y, A and B may be hydrogen, halogen or alkyl; and

R may be alkylene or cycloalkylene.

The preferred compound is one where

$R_1$ is either $CH_2 = CH—$, or

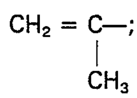

*A* or *B* is hydrogen or a methyl group;

$R_2$ is H or halogen; and

$R_3$ is

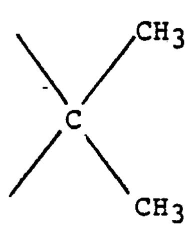

or

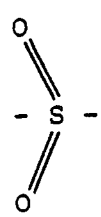

These are particularly useful in compositions of this invention based on polyaryl sulphones, polyarylates and polycarbonates described previously, as they have been found to reduce the glass transition temperature of the aromatic polymer.

b) *Esterified Bisphenol Epoxy Resins*

These are the products of the reaction between monofunctional unsaturated organic acids (or a mixture of monofunctional saturated and unsaturated organic acids) and Bisphenol Epoxy resins.

Within the family of unsaturated polyester resins are included also the alkoxylated Bisphenol unsaturated polyester resins generally known commercially as Bisphenol A unsaturated polyester resins.

Bisphenol epoxy resins can be represented by the general formula

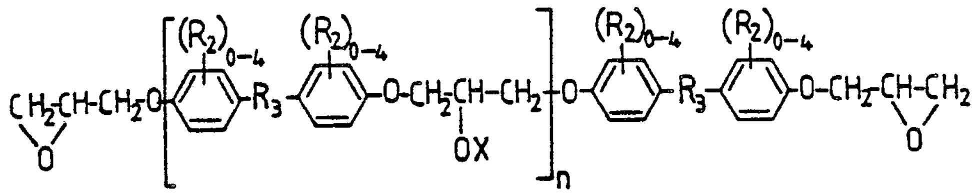

where

*n* is a number varying from 0 to 20;

$R_2$ and $R_3$ are as defined for unsaturated esters of alkoxylated dihydric phenols; and

*x* is either H, or acyl or aroyl radical.

The preferred compounds are those where $R_2$ is hydrogen or halogen, $R_3$ is

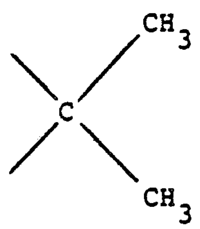

or $SO_2$, and X is hydrogen.

The unsaturated acid can be represented by the formula

$$R_1COOH$$

where

$R_1$ is either $CH_2=CH-$ or $CH_2=C(CH_3)H-$.

The preparation of these compounds is well known in the art. A typical method of preparation is given by G. Giuliani and A. Priola, Polymers, 23 (1981) pp. 761—765.

These products are particularly useful in compositions of this invention based on polyaryl sulphones, polyarylates and polycarbonates, described previously, as they have been found to reduce the glass transition temperature of the aromatic polymer.

c) *Esterified Epoxidised "Novalacs"*

These are the products of the reaction between monofunctional unsaturated organic acids (or a mixture of monofunctional saturated and unsaturated organic acids) and epoxidised "Novalac" resin. These esterified epoxidised "Novalacs" can be represented by the formula

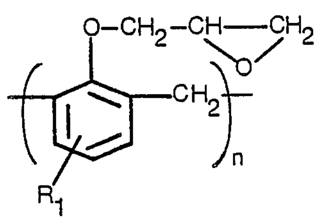

where

*n* is an integral number varying between 2 and 30, and

$R_1$ is either H or an alkyl group.

The nature of the unsaturated acid and the method that can be used to carry out the esterification reactions are as described previously for the bis-phenol epoxy resins.

d) *Unsaturated polyester resins*

These are low molecular weight polymers that can be represented with the general formula

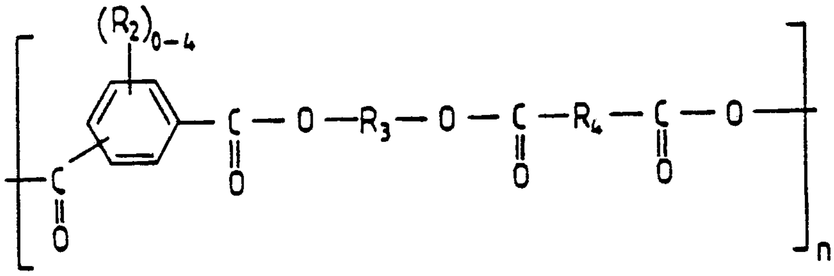

where

*$R_2$* is as defined for esterified bis-phenol epoxy resins and is preferably H, Cl or Br;

*$R_3$* is a branched or linear alkylene group containing between 2 and 12 carbon atoms or an aliphatic polyether having 2 to 12 carbon atoms between recurring oxygen atoms. *$R_3$* may also contain unsaturated groups. More usually *$R_3$* is either $CH_2$—$CH_2$ or

$CH_3$
|
CH—$CH_2$;

*$R_4$* is an unsaturated linear or branched alkenylene radical having between 2 and 12 carbon atoms. More usually $R_4$ is either; —CH=CH— or $CH_2$=C—$CH_2$—.

Preferably $R_2$ is —CH=CH—. The aromatic di-acid residue component is normally either orthophthalic, isophthalic or terephthalic. The aromatic di-acid component can also be totally or partially replaced by aliphatic di-acid, such as adipic acid, succinic, pimelic, suberic, azelaic, sebacic and the like.

The molecular weight of unsaturated polyester resins is normally between 1000 and 10,000 and more usually between 2000 and 5000.

These are particularly useful for this invention as they have been found to reduce the glass transition temperature of the aromatic polymer component, especially the polyaryl sulphones, polyether sulphones and polyether imides, described earlier.

Their use in other aromatic polymers, such as polycarbonates and polyarylates is limited only by their susceptibility to undergo trans-esterification reactions during compounding and processing resulting in more brittle products.

The methods of preparation of unsaturated polyester resins are well known in the art.

These can be represented with the formula

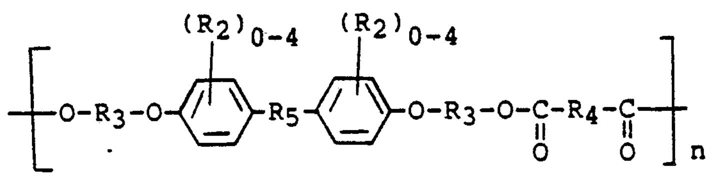

where

*n* is an integer number such that the molecular weight of the resin is in the range 1000—10000;

*$R_2$, $R_3$* and *$R_4$* are as defined previously; and *$R_5$* is selected from —O—, —S—,

O O
‖ ‖
—C—, —S—,
‖
O

>S=O, alkylene of 1—6 carbon atoms, alkylidene of 1—6 carbon atoms, or cycloalkylene of 4—8 carbon atoms.

The preferred compounds are those where

*$R_2$* is H or halogen

*$R_3$* is —$CH_2$—$CH_2$— or

$CH_3$
|
—CH—$CH_2$—;

and $R_5$ is

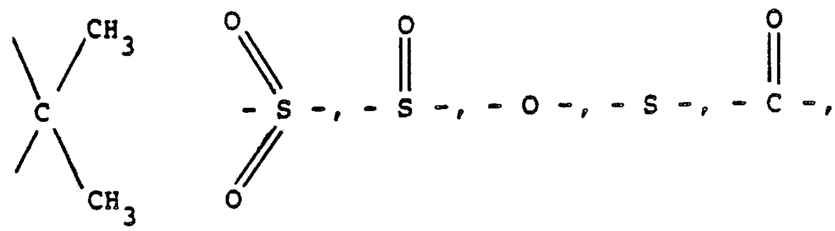

azo, imide or imine.

One source of such resin is ATLAC Chemicals Ltd., sold under the trade name ATLAC 382E. For this resin $R_2$ is H, $R_3$ is

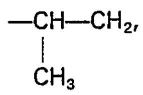

$R_4$ is —CH=CH— and
$R_5$ is

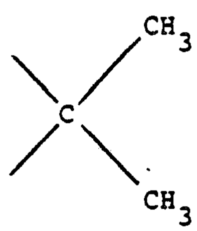

Unsaturated polyester resins can also be produced with reactive double bonds placed either only at the end of the chains or dispersed both along the chains and at the end of the chains.

For instance any of the unsaturated polyester resins described above may be prepared with an excess of glycol to produce hydroxyl terminated polyester chains.

These can be subsequently reacted with an unsaturated acid or acid chloride to esterify the terminal hydroxyl groups. The amount of glycol and unsaturated diacid used in the production of the polyester can be adjusted to obtain varying proportions of middle of the chain and end of the chain unsaturation.

e) *Polystyryl-Pyridyl resins*

These are low molecular weight polymers that can be represented by the general formula and known as poly(methylpyridylene-vinylene-phenylene)

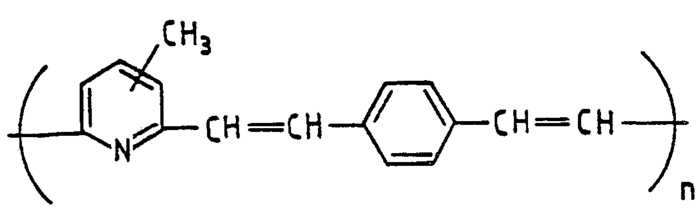

These are produced from the reaction of tri-methyl pyridine and terephthalic aldehyde. The method of production of these resins is described in U.S. Patent No. 3994862.

The properties and description of these resins are given by B. Block in A. R. Bunsell et al. (Ed.). Advan. in Composite Materials Vol. 2, 3rd Intr. Conf. on Composite Materials, Paris, Aug. 26—9, 1980 p. 1674—86.

A commercial source of these resins is Societe Nationale de Poudres et Explosives, sold under the trade name of PSP 6022 Resin. These resins are particularly useful for this invention as they have been found to be compatible with polysulphones.

f) *Bis-imide Resins*

These are low molecular weight resins that can be represented with the general formula

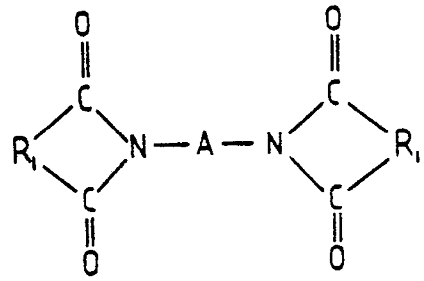

where $R_1$ is one of the following diradicals

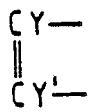 , 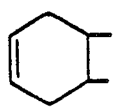 and 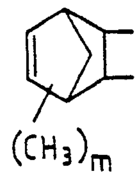

in which Y and Y′ represent H, $CH_3$ or Cl and m is equal to 0 or 1, or

more usually, $R_1$ is —CH=CH— or an unsaturated adduct as described, for instance, in BE 876,616; and

*A* is an aromatic residue selected from the following series.

(i) substituted or unsaturated aromatic radicals, such as

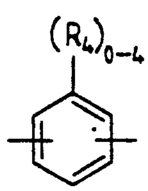 or 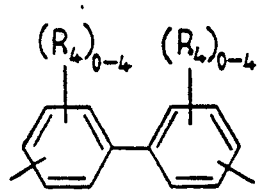 ,

(ii) a divalent radical of the formula

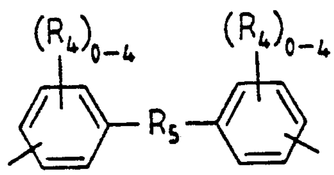

where

$R_4$ is independently $C_1$ to $C_6$ alkyl or halogen; and

$R_5$ is selected from —O—, CO, $SO_2$, SO, alkylene of 1 to 6 carbon atoms, cycloalkylene of 4 to 8 carbon atoms, alkylidene of 1 to 6 carbon atoms or cycloalkylidene of 4 to 8 carbon atoms, or

(iii) a divalent radical of the formula

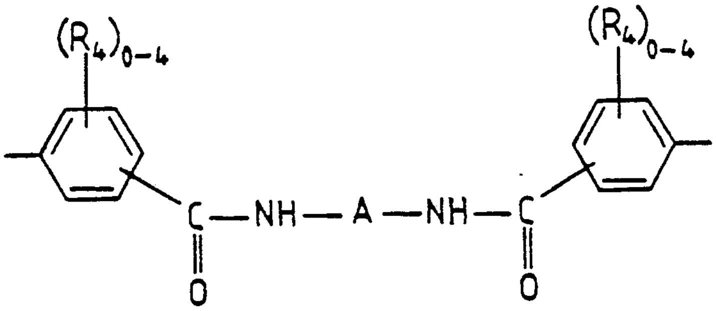

where

$R_4$ and *A* are as described previously.

The preferred dimaleimide resin for this invention is one where *A* is m-phenylene. A source of such a material is Messrs. Du Pont de Nemours, sold under the trade name of HVA-2. Typical methods of

preparation of bis-imide resins are given in G.B. Patent No. 1,137,592 and U.S. Patent No. 3,018,290. Included in the scope of this patent are amine adducts of bis-maleimide resins, as described in French Patent No. 1,555,564, and amino-siloxane adducts as described in G.B. Patent No. 2,018,802.

g) *Unsaturated imides*

These are compuonds that can be described with the formula

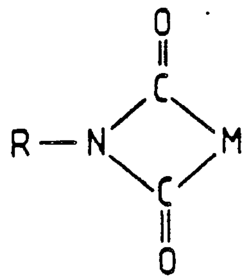

where

*R* represents an organic radical containing at least one —C=C— or C≡C— group and a total of 2 to 9 carbon atoms; and

*M* represents a divalent organic radical which contains at least one group of the formula:

(i)

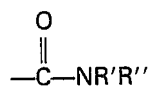

wherein R′ represents a hydrogen atom, an alkyl group containing 1 to 12 carbon atoms, an aryl group, or a group containing at least one C=C or C≡C— group and a total of 2 to 9 carbon atoms, and R″ is a group containing at least one C=C or —C≡C— group;

(ii)

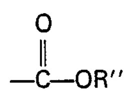

wherein R″ represents a group containing at least one C=C or —C≡C— group and a total of 2 to 9 carbon atoms; or

(iii)

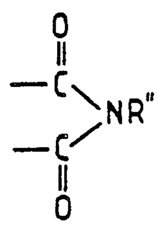

wherein the free valences are attached to carbon atoms in the group M which are directly linked to each other and R″ is as described previously.

Examples of the structure and methods of preparation of these compounds are given in G.B. Patent No. 1,598,481.

h) *Multifunctional Acrylic Monomers and Telemers*

These are compounds that can be described with the general formula

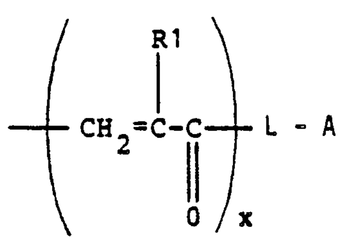

where

$R_1$ is either H or $CH_3$ group,

*x* is an integer from 2 to 6,

*A* is a multivalent radical (valency 2 to 6) containing aliphatic and/or aromatic groups.

The link L between A and the

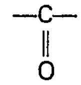

group may be effected by either —O—, —S— or —NH— groups, or a direct bond.

Particularly useful to this invention are compounds in which the residue A is alkoxylated cyanurate or isocyanurate. A preferred class of multifunctional acrylic monomers for this invention are tris-(2-methacryloxy or acryloxy-ethyl) isocyanurate. One source of such compounds is Messrs. Hitachi Chemical Europe GmbH, sold under the trade name of FA—731A and FA—731M.

i) *Multifunctonal allyl esters*

These are compounds that can be represented with the formula

$$(CH_2{=}CH{-}CH_2)_x\!-\!A$$

where

*x* is an integer number from 2 to 6 and

*A* is an inorganic, an aromatic or aliphatic residue of a multifunctional acid.

Particularly useful for this invention are compounds where *A* is one of the following:

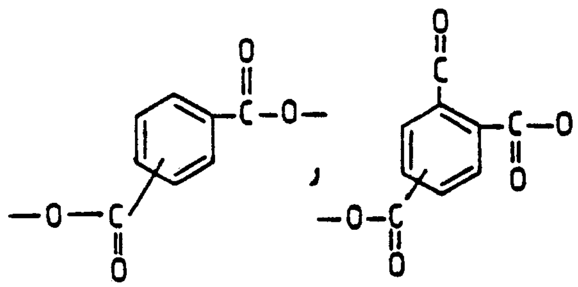

, 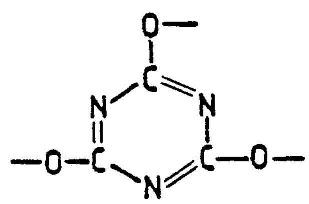 , 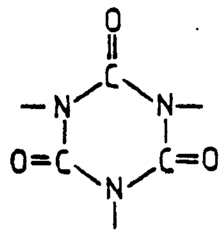

j) *Unsaturated Urethane Oligomers*

Urethane oligomers are compounds produced from the reaction of isocyanate terminated intermediates and hydroxyl terminated monomeric or oligomeric compounds.

These products are well known in the art and their method of preparation can be represented as follows:

$$n(OCN\text{-}A\text{-}B\text{-}NCO) + n(HO\text{-}D\text{-}E\text{-}OH) \longrightarrow$$

$$OCN\text{-}A\text{-}B\text{-}NH\text{-}CO\left[O\text{-}D\text{-}E\text{-}O\text{-}CO\text{-}NH\text{-}A\text{-}B\text{-}NH\text{-}CO\right]_{n-1}O\text{-}D\text{-}E\text{-}OH \qquad (I)$$

For the useful oligomers of this invention the degree of polymerisation, n, is such that the molecular weight of the product is between 600 and 8000.

For the production of the unsaturated derivatives of the urethane oligomers shown above, / can be reacted with suitable unsaturation compounds to obtain compounds whose terminal groups are either allyl, vinyl, acrylic or methacrylic radical.

The groups A—B in the formula of equation I above can be any of the following:

toluylene, hexamethylene, hexamethylene iso-cyanurate trimer, methylene diphenylene diisocyanates (MD1) and its oligomeric form, represented by the formula

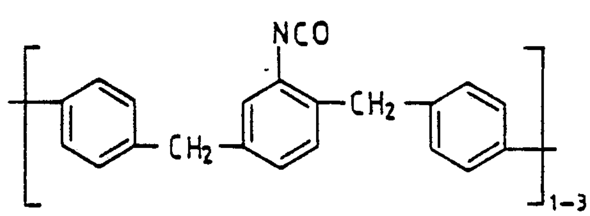

Examples of what may constitute the groupings D—E in equation I are as shown below.

i) 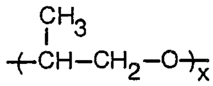

ii) 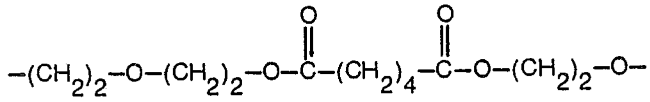

iii) 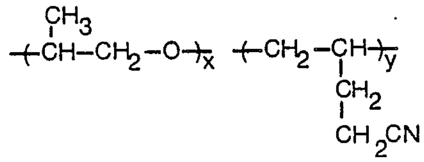

iv) 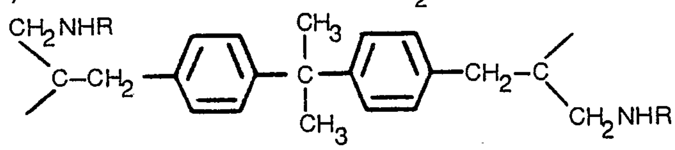

v) 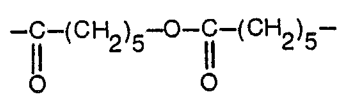

These have been described by C. Bluestein, Polymer -Plast. Technol. — Eng. 17 (1), (1981), 83—93.

There are, of course, many other variants to the types of urethanes oligomers falling within the scope of this patent.

Examples of the composition and methods of preparation of unsaturated urethane oligomers are given in G.B. Pat. No. 2018263 and U.S. pat. No. 4,153,778.

One source of unsaturated urethane oligomers suitable for this invention is Messrs. Diamond Shamrock, sold under the trade name of Photomer 6162.

k) *Acetylene Terminated Oligomers*

These are compounds containing triple bond unsaturation as side or end groups of oligomeric compounds.

Properties and preparation of such compounds with the general formula

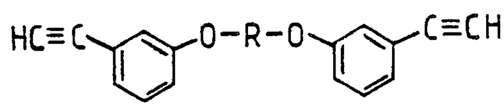

have been described by G. A. Lougham et al. in Org. Coat Plast. Chem. (80) p. 777—82, vol. 43.

In this particular example the radical R is represented by one of the following chemical formulae

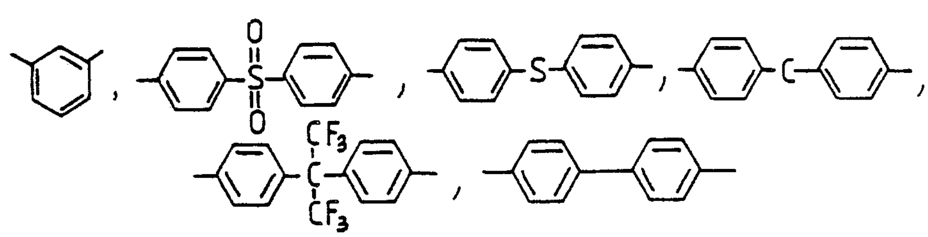

Many variants to the above are possible. One acetylene terminated oligomer that is available commercially is represented by the formula

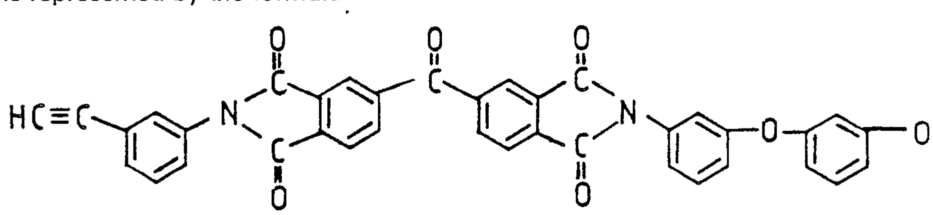

This material is sold by National Starch and Chemical Corp. under the trade name of Thermid.

l) *1,2-Butadiene homopolymers and copolymers*

These are butadiene based polymers containing more than 50% 1,2 vinyl units with the balance being trans and cis 1,4 unsaturation.

The structure can be represented by the general formula

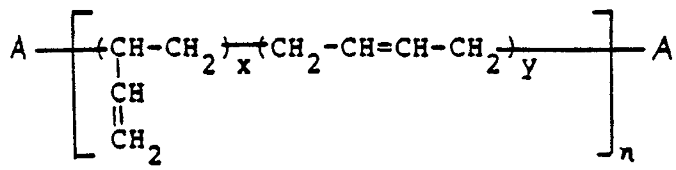

where x is an integer greater than y, and each x and y unit is distributed at random; and the end groups *A* are each independently a hydrocarbon, $-NH_2$, —OH or —COOH group.

A commercial source of this product is supplied by Colarado Chemical Specialities, Inc. and sold under the trade name of RICON.

m) *Mixtures of cross-linking agent and diluents*

Within the scope of this invention is included any mixture of the products described in a), b), c), d), e), f), g), h), i) and j) above. Mixing of various reactive components is particularly useful to optimise the characteristics of the compositions, particularly the amount of gel produced, processing characteristics and physical properties.

Furthermore the cross-linking agents of the said compositions may be replaced with less reactive derivatives of the compounds described above and/or with diluents, such as:

(i) toluene sulphonic acid derivatives, which can be represented with the formula

where $R_1$ and $R_2$ are each independently an H, alkyl or cycloalkyl group.

(ii) aryl sulphonamide resins, which are commercialy available resins, sold as plasticisers for cellulosic and polyamide polymers. According to Ellis Carleton, the Chemistry of Synthetic Resins, Reinhold N.Y. 1935, pp 712—723, these compounds have the following structure:

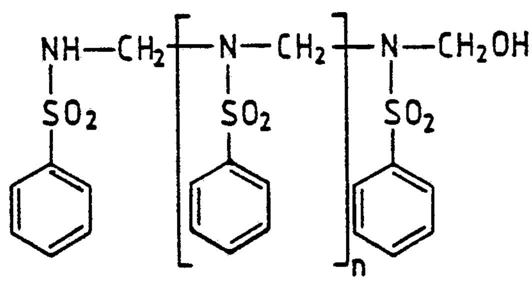

(iii) "Novalac" type phenol-formaldehyde resins, which are well known in the art and can be represented with the formula

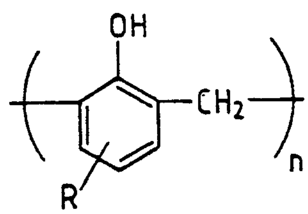

where

*n* is between 3 and 30, and

*R* is h, alkyl or halogen;

(iv) Bis-phenol-S and derivatives, which can be represented with the formula

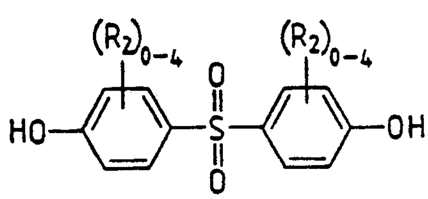

where $R_2$ is an H, alkyl or halogen group.

(v) 4-4′-dichloro diphenyl sulphone and derivatives, which can be represented with the formula

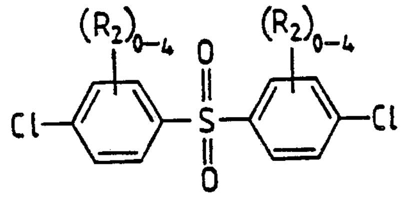

where $R_2$ is an H, alkyl or halogen group;

(vi) 4-4′ diaminodiphenyl sulphone and derivatives, which can be represented with the formula

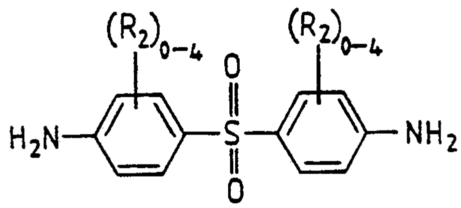

where $R_2$ is an H, alkyl or halogen group; or

(vii) Saturated equivalents of the reactive components described in a), b), c), d), e), f), g), h), i) and j) above, and/or the precursors used for the production of said unsaturated compounds.

With respect to the latter, for instance a diluent for systems containing esterified epoxy resins would be the epoxy resin prior to being esterified.

The compositions of this invention may be melt processed and may contain additional ingredients, such as fillers, fire retardants, carbon black, lubricants, antioxidants and other additives that are known in the art. Fillers and other additives that do not melt during compounding or processing are preferably incorporated in the aliphatic polymer material prior to mixing with the aromatic polymer material. This has the advantage of minimising the extent of embrittlement caused by the filler. Furthermore when the filler is used to confer special properties to the composition, such as electrical conductivity, the localisation of the filler in the continuous aliphatic polymer phase will reduce the amount of filler required to obtain the desired level of property modification.

Compositions according to this invention are useful for the preparation of filaments which are required to have a high recovery ratio and superior resistance to creep. Preferred compositions for this application include polysulphone or polycarbonate as the aromatic polymer material, poly(ether-ester) block copolymer as the aliphatic polymer material, and acrylated epoxy resin as the cross-linking agent.

Some of the reactive cross-linking agents and aromatic polymers described above are not compatible with each other. That is to say that a binary blend of an aromatic polymer and a cross-linking forms two discrete phases, each containing one of the individual components. The glass transition temperature of the aromatic polymer in the blend, therefore, does not differ from that exhibited by the polymer in isolation. For the present invention it is preferable that the glass transition temperature of the aromatic polymer be reduced, in order, to facilitate, for instance, the expansion and recovery of the article. Hence it is important to find suitable cross-linking agents that are compatible to find suitable cross-linking agents that are compatible with the aromatic polymer.

Thus, it is preferable to use a mixture of an aromatic polymer, selected from those described above, with a cross-linking agent which contains double-bond insaturation, the aromatic polymer having a glass transition temperature in the mixture which is lower than its inherent glass transition temperature.

These compositions comprise (I) an aromatic polymer (or a mixture of aromatic polymers) as the main component and (II) a multifunctional unsaturated compound (or a mixture of unsaturated compounds) that is compatible with component I, i.e. a blend of the two components exhibit a glass transition temperature that is intermediate between that displayed by the individual components in isolation.

When subjected to high energy radiation to a dose in the range 2—50 MRads, at a temperature substantially lower than the Tg of the blend, these compositions are not liable to undergo polymerisation or cross-linking reactions owing to the restricted mobility of the cross-linking agent within the aromatic polymer matrix but such reactions, on the other hand, will take place when the compositions are aged at high temperatures.

Where the aromatic polymer is a polysulphone or polyethersulphone, the cross-linking agent is preferably selected from unsaturated esters of alkoxylate dihydric phenols; esterified bisphenol epoxy resins; esterified epoxidised "Novalacs"; unsaturated polyester resins based on either orthophthalic, isophthalic or terephthalic acid; polystyryl pyridyl resin, all as hereinbefore defined; N,N′-m-phenylene dimaleimide; polyethylene glycol dimethacrylate; triallyl isocyanurate; tris-(2-methacryloxy alkyl isocyanurate); and tris-(2-acryloxy alkyl acrylate). More preferably the cross-linking agent is one or a combination of compounds selected from 2,2-bis-4-(methacryloxy-epoxy) phenyl propane; 2,2-bis-4-(acryloxy-ethoxy)-phenyl propane; Acrylated bis-phenol epoxy resin, as herein before defined;

orthophthalic-, isophthalic- and terephthalic unsaturated polyester resins as hereinbefore defined, N,N'm-phenylene dimaleimide; polyethylene glycol dimethacrylate, as herein before defined; triallyl isocyanurate; tris-(2-methacryl oxyethyl isocyanaurate); tris-(2-acryloxy ethyl isocyanurate: N,N'-methylene bis-acrylamide and N,N'-ethylene bis acrylamide; and the aliphatic polymer is preferably selected from 2,2-bis-4-(methacryloxy-ethoxy) phenyl propane; 2,2-bis-4-(acryloxy-ethoxy)-phenyl propane; acrylated bis-phenol epoxy resin; orthophthalic, isophtalic and terephthalic unsaturate polyester resins; alkoxy- bis phenol A unsaturated polyester resin; polystyryl pyridyl resin; N,N'm-phenylene dimaleimide; polyethylene glycol dimethacrylate; triallyl isocyanurate; tris-(2-methacryloxy ethyl isocyanurate); tris(2-acryloxy ethyl isocyanurate); N,N' methylene bis acrylamide; N,N'ethylene bis acrylamide.

Where the aromatic polymer is a polyether-imide, either alone or in combination with one or more other aromatic polymers, the crosslinking agent is preferably one of a combination of compounds selected from unsaturated polyester resin, base on either orthphthalic, isophthalic or terephthalic acid, an alkoxy bis-phenol A unsaturated polyester resin, triallyl isocyanurate and unsaturated esters of alkoxylated dihydric phenols; and the aliphatic polymer is preferably selected from poly(ether-ester) block copolymers, poly(ether-amide) block copolymer, polyvinyledene fluoride homopolymer and copolymers, ethylene copolymers, chlorinated polyethylene, acrylate elastomer and chlorotrifluoroethylene copolymers. In these compositions, the aliphatic component may contain in addition a polyhydroxyether material, or a polyalkylene terephthalate or the equivalent copolyesters, i.e. esters that contain a minor amount e.g. from 0.5 to 2% of repeating units derived from an aliphatic or another aromatic dicarboxylic acid and/or another aliphatic diol and polyol, at levels up to 50%, the total amount of polyhydroxyether, polyalkylene terephthalate or other copolyesters together with the component (B) being within the ranges specified for component (B).

The present compositions may also include a non-reactive diluent having a molecular weight of less than 20,000, preferably selected from toluene sulphonic acid derivatives, arylsulphonamide resins, novolac phenolformaldehyde resins, bis-phenol S and its derivatives, 4,4'-dichlorodiphenyl sulphone and its derivatives, 4,4'-diaminodiphenyl sulphone and its derivatives, fully saturated forms of the cross-linking agents (C), and tackifying resins, the total amount of diluent and component (C) being within the ranges specified for (C).

Similarly, it is advantageous to combine the aliphatic polymer with a compatible crosslinking agent, that is, the glass transition temperature of the resulting blend is between those of the separate aliphatic polymer and cross-linking agent. It has been found that certain of the cross-linking agents described above are compatible with certain thermoplastic aliphatic polymers.

Thus advantageous compositions may comprise a mixture of aliphatic thermoplastic elastomer comprising soft polyether or polyester blocks and hard polyester, polyamide or polyurethane blocks, and one of a combination of cross-linking agents selected from acrylated bis-phenol-A-epoxy resin, isophthalic unsaturated polyester resin, triallyl isocyanurate and 2,2'-bis-4-(methyl-acryloxy-ethoxy)-phenylpropane.

Preferably between 3 and 50% by weight base on the total weight of the composition, of the crosslinking agent is used, more preferably 10 to 35%. It may be desirable to use in addition to the cross-linking agent (C), polyhydroxy ether material, the total amount of (C) and the polyhydroxy ether material being within the ranges specified for (C).

Surprisingly it has also been found that by adding a small percentage of between 0.1 to 10%, preferably 1 to 5%, of an incompatible cross-linking agent to the aliphatic polymer/compatible cross-linking agent blends described above, the degree of cross-linking in the resulting materials (after being subjected to radiation) is much higher than would be expected.

The term aliphatic polymer also includes mixtures of two or more aliphatic polymers. Preferably the soft blocks of the aliphatic polymer are polyether blocks and the hard blocks are polyester blocks. A preferred incompatible cross-linking agent is methylene bis acrylamide. The cross-linking agents are preferably unsaturated and preferred compatible cross-linking agents are those mentioned above for the blends of aliphatic polymer with a compatible cross-linking agent, most preferably acrylated bis-phenol-A-epoxy resin, isphthalic unsaturated polyester resin, triallyl isocyanurate, or 2,2'-bis-4-(methylacryloxy-ethoxy)phenyl ropane.

A preferred composition is one which comprises (A) a polysulphone or polyethersulphone, (B) a poly-(ether-ester) block copolymer, and (C) an acrylated bisphenol epoxy resin. The composition may additionally contain either a vinylidene fluoride/hexafluoropropylene copolymer, a propylene/tetrafluoroethylene copolymer, or an ethylene/propylene terpolymer, the total amount of such polymer together with the said block copolymer (B) being within the ranges specified for component (B).

Preferably the composition is cross-linked by electron-beam radiation, gamma radiation or UV radiation.

For example, a binary blend of a poly(ether-ester) block copolymer with 20% of the compatible cross-linking agent 2,2'-bis-4-(methoxyacryloxy-ethoxy) phenyl propane results in a gel content of 54.2% when subjected to an electron beam dose of 10MRads, and a blend of the same polymer with 3.0% of an incompatible cross-linking agent N,N'-methylene bis acrylamide results in a gel content of 72.4% when subjected to the same cross-linking conditions. It would be expected that a blend of the same polymer containing 20% 2,2'-bis-4-(methoxyacryloxy-ethoxy)phenyl propane and 30% N,N'-methylene bis

acrylamide would result in a gel content between the gel contents achieved for the two separate blends. However, it is found that, given the same cross-linking conditions, a gel contect of 78.5% is achieved.

The invention is now illustrated by the following Examples.

## Example 1

By way of illustration, various binary blends of aromatic polymers with cross-linking agents and diluents respectively, described above, were produced using a small compounding mixer manufactured by Messrs. Haake Inc., Model Rheomix 600, 63 cc capacity. The mixing conditions were varied according to the melting characteristics of the aromatic polymer. The temperature range was 270—320°C and the rotor speed in the region of 50—100 rpm. The aromatic polymer was charged to the mixer and melted. The cross-linking agent was then added slowly and mixing continued for 3 to 5 mins. Longer mixing times were occasionally required to allow a good dispersion to take place. The percentage of cross-linking agent was kept in most cases at 20% by weight. In those situations where the cross-linking agent was too volatile or likely to degrade during mixing, the addition to the aromatic polymer was carried out by pre-blending this agent with a poly(ester-ether) block copolymer, supplied by Messrs. Du Pont de Nemours under the trade name of Hytrel 4056.

The blends were pressed into square slabs, about 0.7 mm thick, at 260°C and the glass transition temperature determined by measuring the temperature of the mechanical-loss peak using Dynamic Mechanical Analyser (DMA), supplied by Messrs. Du Pont de Nemours.

From the data in Table 1 it can be seen that the compatibility of these binary blends, as deduced from the lowering of the glass transition temperature from that of the aromatic polymer, do not follow any obvious trend. It was completely unexpected, for instance, that a bis-phenol A based unsaturated polyester (ATLAC 382E, supplied by Messrs. Atlac Chemicals) should not be compatible with a polyaryl sulphone (UDEL P1800, supplied by Messrs. Union Carbide), after an acrylated bis-phenol A epoxy resin (Acrylated Araldite 6150, supplied by Messrs. Ciba Geigy) was found to reduce considerably the glass transition temperature of said aromatic polymer. It was also surprising that unsaturated polyester resins based respectively on ortho-, iso- and terephthalic acid should be compatible with a polyether sulphone (VICTREX P200) after the bis-phenol A unsaturated polyester was found to be only slightly compatible.

It is thus possible to select compatible combinations of aromatic polymer and cross-linking agent, and the invention accordingly includes such combinations *per se*.

## Example 2

A composition containing 72% polysulphone (Udel P1800) and 28% acrylated epoxy resin (Acrylated Araldite 6150) was produced according to the method described in Example 1.

The blend was pressed into square plaques, 0.7 mm thick, at 260°C and beamed at 10 and 20 Mrad, at a dose rate of 40 KRad/sec. Subsequently the plaques were placed in an air circulating oven at 150°C for 1 week and then at 180°C for another 5 day period.

About 0.3—0.4 g square pieces were cut from the plaques and boiled for 6 hours in 150 cc dimethyl formamide in order to extract the unreacted aromatic polymer and any other uncross-linked matter present. The residue was filtered through a very fine steel gauze, dried for 2 hours at 120°C and weighed.

Control samples, which were not heat-aged, contained no insoluble matter either before or after irradiation and the solutions were clear. The samples that were aged at 150°C developed a small amount of fluffy residue and the solution was cloudy. Those samples that were aged for an additional period of 5 days at 180°C, on the other hand, contained 34.0% undissolved matter.

The samples were also evaluated on a Dynamic mechanical spectrometer (DMA) manufactured by Messrs. Du Pont de Nemours and the mechanical-loss traces obtained were used to determine any changes in transition temperatures. The control samples, before and after beaming, were very similar, showing a major peak at 151°C and a smaller one at 83°C.

The samples that were aged for 1 week at 150°C showed a major peak at 170°C, a fairly large peak at 106°C and a very small one at 84°C.

The samples that were aged for an additional period of 5 days at 180°C displayed a sharp peak at 177°C and a large peak (broader) at 149°C.

The experiments were repeated using a blend of 80% polyether-imide (Ultem, ex General Electric Co.) and an unsaturated polyester resin based on isophthalic acid (C495, ex Scott Bader Ltd).

Once more the experiments showed that irradiating the samples to 10 and 20 MRad made no appreciable difference to the solubility of the blend in dimethyl formamide and to the mechanical-loss specturm.

The major peak occurred at 185°C and a smaller peak occurred at 45°C.

After ageing the samples for 1 week at 150°C and 5 days at 180°C the major peak shifted to 195°C while the smaller peak shifted to 85°c.

These observations confirm that polymerisation reactions have occurred primarily during the high temperature ageing period.

Example 3

A series of ternary blends to exemplify the system Aromatic polymer/cross-linking agent/Aliphatic polymer were produced by blending the ingredients on the Rheomix 600 mixer as described in Example 1.

The aromatic polymers used were respectively a polyaryl sulphone (Udel P1800, ex Union Carbide), a poly ether sulphone (Vitrex P200, ex I.C.I.) a poly ether-imide (Ultem ex. General Electric), and a polycarbonate (Orgalan 12500 ex ATO Chemie). The aliphatic polymers were selected to cover a wide range of polarity and chemical constitution, i.e. a low density polyethylene (DYNH—3), ex BXL Plastics Ltd.)., a polyvinylidene difluoride, (Kynar 460, ex Penwalt), a poly(ester-ether) block copolymer (Hytrel 4056, ex Du Pont de Nemours) and a poly(ether-amide) block copolymer (ELY 1240 — ex EMS-Grillon (U.K.) Ltd.) respectively. The cross-linking agents used were respectively an acrylated epoxy resin (Acrylated Araldite 6150, ex Ciba Geigy), a bis phenol A unsaturated polyester resin (Atlac 382 E, ex Atlac Chemicals) and triallyl isocyanurate.

The aliphatic polymer was used in the form of masterbatch containing a small amount of a radiation cross-linking aid in order to obtain a base line for typical radiation cross-linkable polymer systems.

The poly(ester-ethyl) masterbatch was a blend of 90% HYTREL 4056 and 10% HYTREL 10 MS to which was added 3.0 phr of N,N' methylene bis-acrylamide as the cross-linking aid. (HYTREL 10MS is believed to be a masterbatch of HYTREL 4056 containing 20% of a polycarbonimide hydrolysis stabiliser).

The low density polyethylene and polyvinylidene difluoride and poly(ether-amide) masterbatches contained 0.5% triallyl isocyanurate.

In one case the concentration of the aliphatic polymer masterbatch in the ternary blend was increased in several steps up to 46.0% while the total amount of the cross-linking agent was respectively 4.6 and 9.2%.

Control experiments were also carried out on binary blends of both aromatic polymer and cross-linking agent and aromatic polymer and aliphatic polymer respectively.

Each sample was pressed into 0.7 mm thick plaques at 260°C and irradiated by means of an electron beam to 10 and 20MRad dose levels at a rate of 40Krad/sec. About 0.3—0.4 g square pieces were cut from the 'beamed' plaque and boiled for 6 hours in 150 cc dimethyl formamide in order to extract the aromatic polymer and any other uncross-linked matter.

The undissolved gel was filtered through a very fine steel gauze, dried for 2 hrs at 120°C and weighed. The amount of undissolved residue was used to calculate the % gel. For the case where low density polyethylene was used as the aliphatic polymer, after extraction in dimethyl formamide the solvent was decanted and replaced with toluene. The gel was boiled for an additional 3-hour period and filtered, dried and weighed as described previously.

In those cases where a cross-linked polymer gel was formed as a result of the irradiation, the body after extraction was continuous, retained a geometry similar to that of the original piece, and was highly swollen with solvent.

After drying, the small plaque residues had similar characteristics (e.g. flexibility) as the samples that had been mixed and beamed without any aromatic polymer present, indicating that it is the aliphatic polymer component that is cross-linked.

Examination of fractured surfaces from dry-gel pieces by Stereoscan Electron Microscopy showed no signs of holes left by the unreacted matter, while the sulphur content, for instance of the polysulphone based samples, as measured by the Energy Dispersion X-Ray Analyser was very small, i.e. less than 2%. This confirmed that the cross-linked matter was essentially due to the aliphatic polymer and that it was present as a fine continuous network within the unreacted aromatic polymer.

The plots of gel content content v.s. concentration of aliphatic polymer masterbatch, show that a minimum concentration of aliphatic polymer has to be exceeded before a gel is being formed. This depends on the nature of the aromatic and aliphatic polymers considered. When a cross-linking agent, such as an acrylated epoxy resin is added, the minimum concentration of aliphatic polymer required for the formation of a continuous gel is reduced considerably. Furthermore in the concentration range of interest, e.g. approx. 10—35% aliphatic polymer, the amount of gel produced by the incorporation of the cross-linking agent is also much higher. The extent of increase in gel content is far greater than would be possible by increasing only the radiation dose. (Compare Fig. 1 with Fig. 2).

One notices also that simple binary mixtures of aromatic polymer/cross-linking agent do not produce a gel even when the concentration of the cross-linking agent is very high, i.e. in the region of 50% w/w. This is contrary to what one would have expected from the teaching of the state of the art. (A. Wereta Jr., G. A. Loughran and F. E. Arnold, A.C.S. Org. coat. Plast. Chem. Prepr., 36 (2), 287 (1976) on the formation of continuous networks within an aromatic polymer.

In the ternary blends of this invention, therefore, the cross-linking agent and the aliphatic polymer act synergistically to produce a continuous gel.

When the graphs of Fig. 1 are replotted as functions of the total amount of aliphatic polymer and cross-linking agent, the curve of gel content for the ternary blend lies above that of the base curve. (See Fig. 3).

The results in Table 2 show that the behaviour exhibited in Figs. 1 and 2 is applicable also to systems based on other aromatic polymers, which can be used for a wide range of unsaturated compounds and aliphatic polymers. In other words the principle of gellation enhancement is of a general nature.

Example 4

A series of formulations based on a polyaryl sulphone, containing cross-linking agents selected from those exemplified in Table 1 and a number of aliphatic polymers, were produced on a larger scale than those described in Examples 1 and 2.

These formulations contained other additives, such as antioxidants, inhibitors, compatibilisers etc.

The compounds were made up by producing first a masterbatch of polyaryl sulphone and cross-linking agent using a twin screw extruder (Leistritz laboratory extruder type LSM 30—34) set at a nominal barrel temperature of 280°C. A masterbatch of the aliphatic polymer containing the cross-linking aid, antioxidants etc. were produced on a laboratory two-roll mill and subsequently granulated.

The two masterbatches were tumble-blended and compounded on the Leistritz twin extruder at a nominal barrel temperature of 220—240°C. For one set of experiments a number of plaques (ca. 0.7 mm thick) were compression moulded at 260°C, beamed to several doses at a rate of 40 KRad/sec., and cut into suitable specimens. (Formulations are shown in Table 3). Small pieces were used to measure the gel content as described in Example 2.

Tensile specimens were used to evaluate the expansion characteristics by measuring the tensile strength and elongation at break. The temperature was set at about 20—40°C above the main glass transition temperature of the composition under evaluation. Other specimens were stretched in a tensile testing machine at the same temperature and immediately frozen with a jet of liquid nitrogen. These specimens were subsequently reheated for about 15 mins in an oven set at a temperature equal to or greater than the expansion temperature, allowed to recover and the percentage of unrecovered extension (amnesia) was measured. With this test a sample that does not exhibit heat-shrinking properties would have an unrecovered extension approaching 100%.

Rectangular strips were used to measure the critical strain ($\varepsilon_c$) at which the material would craze or crack when placed into contact with methylethylketone (MEK). This test was performed by pulling the strip to a pre-fixed strain using a 1 mm/min grip separation speed and immediately placing the two sides of the specimen into contact with two pads impregnated of the specimen into contact with two pads impregnated in MEK, using a specially built jig so that the same pressure would apply in each case. The specimen under load was left into contact with a MEK for 1 minute and observations were made as to whether the specimen fractured or crazed. In this test the formation of crazes is accompanies by a rapid decrease of the load exerted onto the specimen. When the specimen failed, the test was repeated using lower strain levels and the level of strain at which failure did not occur within 1 minute was recorded as the critical strain ($\varepsilon_c$).

The results in Table 4 illustrate the relationship between % gel, high temperature mechanical properties, recovered extension and critical strain for solvent crazing.

The control samples (i.e. the unmodified aromatic polymer) and those that do not contain an appreciable amount of gel exhibit a very low strength at high temperature, a high % unrecovered extension and a low value of the critical strain in presence of MEK.

The heat recovery experiments were also carried out by means of a hot air gun after pre-drying the specimens for about 1 hour at 120°C. With the exception of the control samples, all the specimens recovered without any sign of flow or dripping.

In addition to the above experiments a number of compounds were extruded into tubings, 6 mm O.D. and 0.6 mm wall thickness, using a Brabender laboratory extruder. Good quality tubings could be extruded at nominal barrel temperature in the range of 250—260°C.

The tubings were then beamed to 10 to 20 MRad dose levels and cut into 30 cm lengths. Those were then expanded in a hot air oven at 2:1 and 3:1 blow ratios (the blow ratio being defined as the ratio of the diameter of the tubing after expansion to the diameter of the tubing before expansion). Temperatures as low as 190°C were sufficient to expand tubings to about 2:1 blow ratio, while higher blow ratios required temperatures in excess of 210°C to prevent splitting.

The expanded tubings were recovered over PTFE mandrels using an air oven and a hot air gun respectively. The % unrecovered strain was calculated using the formula Recovered diameter/unexpanded diameter × 100. In every case the tubing would recover at temperatures as low as 210°C. The tubings recovered by means of an hot air gun were previously pre-dried for about half hour at 120°C to prevent blistering. The results in Table 5 show that in every case there is substantial recovery of the specimens and tubings both by means of an oven or hot air gun.

Example 5

A series of mixes based on polysulphone were produced using two different types of aliphatic polymers, respectively a poly(ether ester) and a poly(ether-amide) block copolymer, a cross-linking agent and a mixture of two different cross-linking agents, respectively an acrylated epoxy resin and an unsaturated ester of alkoxylated bisphenol A. Additional blends were produced, where the cross-linking agent was partially replaced with phenolic compounds that have previously been found to act as a non-reactive diluent compatible with the aromatic polymer in the sense previously mentioned, respectively a dihydroxy diphenyl sulphone and a phenol-formaldehyde resin (Novalac type).

An antioxidant, an inhibitor and a hydrolisis stabiliser were used to prevent cross-linking reactions occurring during compounding and/or processing.

The mixes were produced by making first a masterbatch of the polysulphone with the cross-linking

agents and phenolic diluent, using a Leistritz twin extruder (type LSM 30—34), set at a nominal barrel temperature of 280°C. These were subsequently tumble blended with the aliphatic polymer, the hydrolysis stabiliser and a cross-linking aid, and extruded on the Leistritz extruder set a nominal barrel temperature of 220°C. (The formulations are shown in Table 6). The compounds were pressed into 0.7 mm thick plaques, beamed to various radiation doses at a rate of 40 KRad/sec and evaluated for gel content, glass transition temperature (Tg) using the Du Pont Mechanical Spectometer, and mechanical properties at a temperature above the main Tg of the mix, as described under examples 1 and 3. (Results in Table 7). Tubings, about 6 mm O.D. and 0.6 mm wall thickness, were also extruded using a 1" screw Betol extruder, set a nominal barrel temperature of 260°C. These were beamed to 10 MRad, cut into short lengths and expanded to blow ratios of about 2:1, as described previously.

Samples of expanded tubings were placed over PTFE mandrels and recovered in an oven set at 210°C. In each case the amount of unrecovered strain was less than 20%.

Example 6

A series of ternary blends based on a polyaryl sulphone, a poly(ether-ester) block copolymer masterbatch and a number of cross-linking agents were produced on the Rheomix 600 mixer as described in Examples 1 and 2. The aliphatic polymer masterbatch contained a polycarbodiimide hydrolysis stabiliser (2%) and N,N'methylene bis acrylamide (3 phr) cross-linking aid.

The concentration of the cross-linking agent was kept at 9.2% in each case, while the concentration of the aliphatic polymer masterbatch was 13.8 and 23.1% respectively in each case. The blends were pressed into 0.7 mm thick plaques, beamed to 10 and 20 MRad and at a rate of 40 KRad/sec and the gel content measured as described in Example 2. (The results are shown in Table 8). Some of the compositions containing 23.1% aliphatic polymer masterbatch were also evaluated for tensile strength and elongation at break at temperatures above the main glass transition temperature. (The results are shown in Table 9).

As can be seen from the results in Tables 8 and 9 the addition of a cross-linking agent enhances substantially both the amount of gel produced by beaming and the associated high temperature mechanical properties.

Comparisons with the results for control No. 3 shown that there is little benefit to be gained in increasing the level of aliphatic polymer masterbatch and, therefore, the addition of a cross-linking agent is necessary to produce an adequate level of continuous gel and to develop the necessary tensile strength at temperatures above the main Tg.

The poly(ether-ester) block copolymer masterbatch was also mixed with a number of cross-linking agents at 20% concentration level, using a two-roll mill set at a nominal temperature of 150°C. The hides were pressed into plaques (0.7 mm thick) at 180°C, beamed to 10 and 20 MRad at 40 KRad/sec dose rate and tested for tensile strength and elongation to break at 200°C, as described previously.

As can be seen from the data in Table 10 the high temperature extensibility of the aliphatic polymer cross-linked with similar concentrations of cross-linking agent is much lower than that is achievable in ternary blends with aromatic polymers. (Compare with the data in Tables 4, 7 and 9). One cannot predict, therefore, *a priori* whether sufficient extensibility can be developed in ternary blends with the aromatic polymer from the behaviour of the aliphatic polymer/cross-linking agents blends.

Example 7

A series of blends were produced using a range of aromatic polymers, (other than polyarylsulphones), a number of cross-linking agents and a poly(ether-ester) block copolymer masterbatch. The concentration of the cross-linking agent was kept at 9.2% and that of the aliphatic polymer masterbatch at 23.1%.

Mixing of the various components were carried out on a Rheomix 600 mixer as described in Examples 1 and 2.

The poly(ether-ester) copolymer masterbatch contained a polycarbodiimide hydrolysis stabiliser (2%) and N,N' bis methylene acrylamide cross-linking aid (3 phr).

The mixes were pressed into 0.7 mm plaques at 260°C, beamed to 10 and 20 MRad at a rate of 40 KRad/sec and small pieces were used to measure the gel content in boiling dimethyl formamide, as described in Example 2.

The resistance to solvent induced crazing and mechanical properties at temperatures above the main glass transition temperature were not measured since their relationship with the gel content has already been established in previous examples.

The results in Table 11 show that the addition of a cross-linking agent enhances substantially the formation of a continuous gel within the aromatic polymer matrix. It is confirmed, therefore, that the principle is applicable to other aromatic polymers, embodied in this invention.

Example 8

A number of formulations were produced from a series of aliphatic polymers, differing considerably from one another in terms of chemical structure and physical characteristics. The aromatic polymer used was an aryl polysulphone and the cross-linking agent an acrylated epoxy resin. The concentration of the cross-linking agent was kept at 12.5% and that of the aliphatic polymer at 20.0% in each case. The latter was used in the form of a masterbatch containing 0.5% triallyl isocyanurate as a cross-linking aid. The

blends were produced using the Rheomix 600 as described in Examples 1 and 2, consequently pressed into 0.7 mm thick plaques at 260°C and beamed to 10 and 20 MRad at a rate of 4 KRad/secs. Small pieces of the plaques were then used to measure the gel content in boiling dimethyl formamide, as described in Examples 2 and 3.

As explained previously, the mechanical properties at high temperature and the resistance to solvent crazing/cracking were not measured as the relationship between gel content and the said characteristics have already been demonstrated in the previous examples.

The results in Table 12 show that all the samples containing the cross-linking agent exhibit considerable enhancement in gel formation, which demonstrates that the principle outlined in previous examples can be generalised to include a wide range of aliphatic polymers.

Example 9

A series of formulations were produced using mixtures of polysulphones and polyether-imides (together comprising the aromatic polymer component), an acrylated epoxy resin (as the cross-linking agent) and a poly(ether-ester) block copolymer masterbatch (described in Example 2). The concentration of the cross-linking agent was kept at 9.2% and that of the aliphatic polymer masterbatch at 23.1%.

Blends of the aromatic polymers mixtures with the aliphatic polymer masterbatch were also produced and used as controls.

Mixing of the various components was carried out on a Rheomix 600 mixer as described in Examples 1 and 2.

The poly(ether-ester) copolymer masterbatch contained polycarbodiimide hydrolysis stabiliser (2%) and N,N'-bismethylene acrylamide cross-linking aid (3 phr).

The mixes were pressed into 0.7 mm thick plaques, beamed to 10 and 20 MRad at a rate of 40 KRad/sec. and the gel content measured as described in Example 2.

The results in Table 13 show that the addition of the cross-linking agent enhances the formation of a continuous gel. From this it is concluded that the principle outlined earlier can be extended to include mixtures of aromatic polymers.

Example 10

A composition containing 64% Polysulphone, 20% Poly(ether-ester) block copolymer (Hytrel 4056), and 16% Acrylated Epoxy Resin was mixed in a twin screw extruder and subsequently extruded into filaments and electron beamed to 10 MRads. The gel content was in the region of 21—23% and the main glass transition temperatures approximately 158°C. The latter compares with the value of 198°C for the host aromatic polymer.

The filaments were drawn to 3:1 on an Tensile Testing machine (Instron) at 180°C and subsequently evaluated to determine the recovery characteristics and its creep properties.

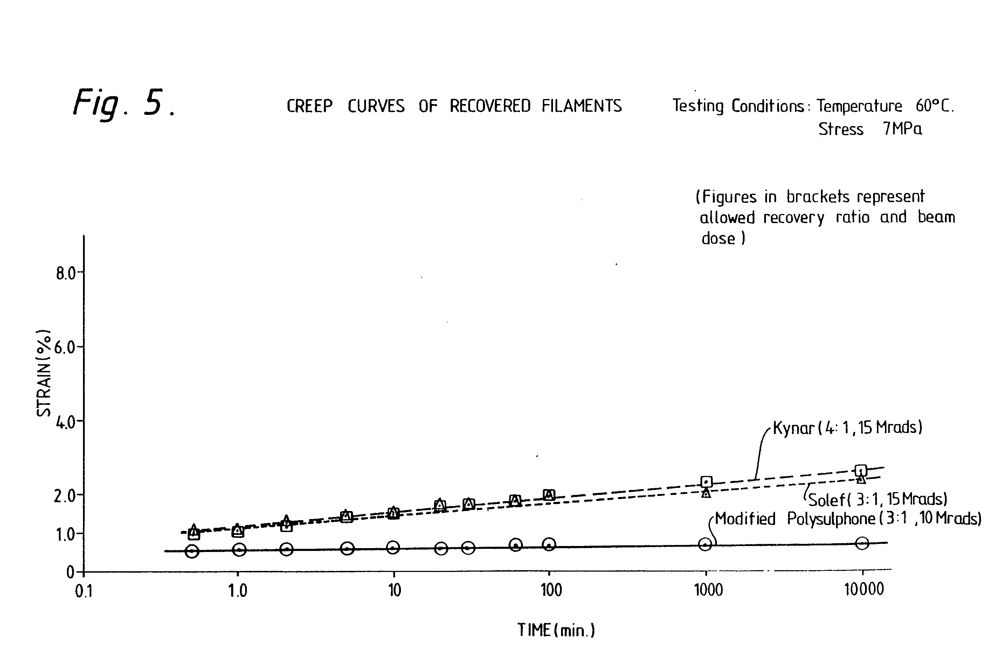

The recovery ratio at 180°C was in the region 2.9—3.0:1 and the recovery stress at 165°C of the order of 3 MPa. The creep properties were measured at 60°C at a stress level of 20 MPa for samples that were relaxed at 180°C under constraints (see Figure 4), and at 7 MPa for samples that were allowed to recover by a ratio of 3:1 (see Figure 5).

The creep behaviour of the modified polysulphone filament was compared with that of polyvinylidenefluoride samples (Kynar and Solef) both irradiated to 15 MRad. The results in Figures 4 and 5 show that in both cases the creep deformation of the modified polysulphone is substantially lower than polyvinylidenefluoride.

Example 11

A number of mixtures of cross-linking agents, listed in Table 14, and a poly(ether-ester) block copolymer (Hytrel 4056, ex DuPont de Nemours), containing 2% polycarbodiimide hydrolysis stabiliser, added from a polymer masterbatch (Hytrel 10MS, ex DuPont), were produced on a two-roll mill set at 150°C. The concentration of the cross-linking agent was kept at 20% by weight based on the total weight of the composition in each case. The sheets from the two-roll mill were pressed into 2 mm slabs at 180°C and beamed to 10 MRads at the rate of 40 KRad/sec.

The dynamic mechanical spectrum of each composition was obtained for each composition using the Dynamic Mechanical Spectrometer (DMA) manufactured by DuPont De Nemours, and compared with that obtained on the control sample (i.e. sample not containing the cross-linking agent).

The results in Table 14 show that, all the cross-linking agents used show an increase in the glass transition temperature of the polymer, indicating that these cross-linking agents exhibit a degree of compatibility with the host polymer.

Example 12

A series of mixtures of a number of compatible cross-linking agents, an incompatible cross-linking agent N,N'-methylene bis acrylamide (MBA) and a poly(ether-ester) block copolymer (Hytrel 4056 — ex DuPont De Nemours), contining 2% polycarbodiimide hydrolysis stabiliser, added from a polymer masterbatch (Hytrel 4056) were produced on a two-roll mill set at 150°C. The mixtures were then pressed at 180°C into sheets 2 mm thick and beamed to 10 and 20 MRads respectively, at a rate of 40 KRad/sec. Small pieces, about 0.3 g, were weighed accurately and boiled in a large excess of dimethyl formamide (approximately 250 cc) for about 7 hours.

The swollen residue (gel) was filtered on a stainless steel fine gauze, dried in an oven at 120°C for 2 hours and weighed. The % gel was calculated as the % insoluble (cross-linked) polymer.

In an initial experiment the concentration of the cross-linking agent was gradually increased and the gel content measured as described previously.

In this experiment it was found that the incompatile cross-linking agent, MBA, gave a higher gel content than the two compatible types, respectively an acrylated epoxy resin (AA6150) and an isophthalic unsaturated polyester resin.

Further experiments on additional compatible cross-linking agent used at 20% level confirmed this trend.

In order to take advantage of the compatibility of some cross-linking agents (i.e. the possibility of using them at high concentration without adversely affecting the mechanical properties of the polymer), and the high cross-linking efficiency of the incompatible cross-linking agent, MBA, (i.e. the possibility of using this at low concentrations in order not to deteriorate the mechanical properties of the polymer), a series of mixtures were prepared wherein the concentration of MBA was kept at 3 phr and that of the compatible cross-linking agent in the range 20—28.5% by weight based on the total weight of the composition.

The samples were prepared as described above, cross-linked using an electron beam at doses of 10 and 20 MRad respectively and the gel content measured.

The experimental results in Table 15 confirmed that considerable enhancement in gel content is achieved when such combination of cross-linking agent is used.

The Tablets referred to in the preceding description now follow.

TABLE 1

Comparison of glass transition temperature values (°C) of various blends of Aromatic Polymers with cross-linking agents. (Level of additive = 20% w/w, unless otherwise stated).

| ADDITIVE / AROMATIC POLYMER | Poly-carbonate (Orgalan 12500) | Poly-arylate (Arylef 100) | Polyaryl sulphone (Udel P1800) | Polyaryl-ether-sulphone (Victrex P200) | Polyaryl-ether-imide (Ultem) |
|---|---|---|---|---|---|
| 1) None | 150 | 197 | 191 | 228 | 220 |
| 2) 2,2'Bis 4-(methacryloxy-ethoxy-phenyl propane) (Diacryl 101 ex Akzo Chemicals) | | | 125 | | 125 |
| 3) 2,2-Bis 4-(acryloxy-ethoxy) phenyl propane (Santomer SR 349 Ex Ancomer Ltd.) | | | 139 | | 224 |
| 4) Acrylated Bis-phenol-A epoxy resin (Acrylated Araldite 6150) M Pt. = 62°C) (Ex Ciba Geigy) | 120 | 160 | 138 | 220 | 220 |
| 5) Acrylated Bis-phenol-S-Epoxy resin (Acrylated Araldite MS 6768, M. pt = 140°C) (Ex Ciba Geigy) (i) | | | 165 | 190 | |
| 6) Orthophthalic unsaturated polyester resin (Ex. Scott Bader Ltd.) | | | 160 | 200 | 188 |
| 7) Isophthalic unsaturated polyester resin (Ex Scott Bader Ltd. Ref. C495) | 125 | 132 | 172 | | |
| 8) Terephthalic unsaturated polyester resin (Ex. BP Chemicals Ltd 490-05C 60 Mo 341/1 Base resin) | | | 172 | 205 | 191 |
| 9) Alkoxy, bis-phenol A fumarate resin (ATLAC 382 E M Pt. = 56°C Ex Atlac Chemicals) | 120 | 150 | 187 | 207 | 181 |
| 10) Polystyryl pyridyl (PSP 6022, SNPE, France) | | | 168 | | |

Contd..........

TABLE 1 (Contd.)

| ADDITIVE / AROMATIC POLYMER | Poly-carbonate (Orgalan 12500) | Poly-arylate (Arylef 100) | Polyaryl sulphone (Udel P1800) | Polyaryl-ether-sulphone (Victrex P200) | Polyaryl-ether-imide (Ultem) |
|---|---|---|---|---|---|
| 11) N,N' m-phenylene dimaleimide (HVA-2 ex Du Pont) (ii) | | | 160 | 228 | 220 |
| 12) Polyethylene glycol dimethacrylate (Santomer SR 210) ex. Ancomer Ltd.) | | | 95 - 120 | | |
| 13) Tris-(2-methacryloxy ethyl) isocyanurate (FA-731 M), ex Hitachi Chemical Co.) | | | 147 | | |
| 14) Tris-(2-acryloxy ethyl) isocyanurate (FA 731 A ex. Hitachi Chemical Co.) | | 186 | 185 | 216 | 200 |
| 15) Acrylated Aromatic polyurethane oligomer (Photomer 6162) (ex Diamond Shamrock) | | | 180 | | |
| 16) N-N'Methylene bis. acrylamide (ii) | | | 185 | | |
| 17) Polyhydroxy ether (Phenoxy PKHH) (ex Union Carbide) | | | 170 | | |

Footnote

(i) This was prepared by reacting in DMF solution a Bis-phenol-S Epoxy resin produced by Messrs. Ciba Geigy Ltd. and supplied under the Code Araldite MS 6768. The epoxy value was 5.15 moles/Kg.

The following quantities of reagents were charged in a reaction vessel fitted with motor stirrer and refluxing condenser and heated at 100°C.

| | | |
|---|---|---|
| Acrylic acid | = | 38.0 g |
| Araldite MS 6768 | = | 100.0 g |
| N-dimethyl para toluidine | = | 1.5 g |
| Dimethyl formamide | = | 100.0 cc |
| Hydroquinone | = | 0.3 g |

Contd..............

TABLE 1 (Contd.)

Footnote (Contd.)

The acid number was measured after 3 hours and at hourly intervals thereafter for a total of 8 hours. During this period the acid number had dropped from an ititial value of 118.2 to 17.5.

The solvent was removed by evaporation under vacuum at 80°C for 48 hours.

(ii) These additives were incorporated from a masterbatch in Hytrel 4056. The final composition contained 9.2% cross-linking agent, 23.1% Hytrel and 67.7% Aromatic polymer. The glass transition temperature of the binary blends of Aromatic polymer/aliphatic polymer was approximately the same as that of the aromatic polymer.

TABLE 1(A)

Comparison of glass transition temperature values (°C) of various blends of Aromatic polymer with diluent and compatibilisers respectively at 20% level of addition, unless otherwise stated.

| Diluent/Compatibiliser — Aromatic Polymer | Polycarbonate (Orgalon I2500) | Polyarylate (Arylef 100) | Polyaryl sulphone (Udel P1800) |
|---|---|---|---|
| 1. None | 150 | 197 | 191 |
| 2. o,p,m- toluene sulphonamide (mixture) | | | 142 |
| 3. Aryl sulphonamide resin | | | 145 |
| 4. "Novalac" phenol formaldehyde resin | | | 147 |
| 5. Bisphenol S | | | 126 |
| 6. 4,4' dichlorodiphenyl sulphone | | | 109 |
| 7. Polyhydroxy ether | | | 170 |
| 8. Poly(ether-ester) block copolymer | 83 | 123 | 186 |

2 = Santicizer 9, ex. Monsanto Chemicals Ltd.

3 = Santolite MHP, ex Durham Chemicals Ltd.

4 = Cellobond J1205G, ex BP Chemicals Ltd.

7 = Phenoxy PK HH, ex Union Carbide

8 = Hytrel 4056, ex DuPont de Nemours

**TABLE 2**

**Gel enhancement within an aromatic polymer**

| EXAMPLE NO: | I | II | III | IV | V | VI | VII | VIII | IX | X | XI | XII | XIII | XIV | XV | XVI | XVII | XVIII |
|---|---|---|---|---|---|---|---|---|---|---|---|---|---|---|---|---|---|---|
| Polyaryl sulphone | 81.0 | 71.8 | 79.0 | 70.0 | 69.8 | 60.8 | | | | | | | | | | | | |
| Polyaryl ether sulphone | | | | | | | 76.3 | 67.1 | 67.1 | | | | | | | | | |
| Polyaryl ether-imide | | | | | | | | | | 76.3 | 67.1 | 67.1 | | | | | | |
| Polyaryl carbonate | | | | | | | | | | | | | 76.9 | 67.7 | 67.7 | 76.9 | 67.7 | 67.7 |
| Acrylated epoxy resin | | 9.2 | | | | | | 9.2 | | | 9.2 | | | | 9.2 | | | 9.2 |
| Bis-phenol-A. unsaturated polyester resin | | | | | | | | | 9.2 | | | 9.2 | | | | | | |
| Triallyl isocyanurate | | | | | 9.2 | 9.2 | | | | | | | | | | | | |
| Low density polyethylene (MB) | 19.0 | 19.0 | | | | | 23.7 | 23.7 | 23.7 | 23.7 | 23.7 | 23.7 | | | | | | |
| Polyvinylidene difluoride (MB) | | | 21.0 | 30.0 | 21.0 | 30.0 | | | | | | | | | | | | |
| Poly(ether-ester) block copolymer (MB) | | | | | | | | | | | | | | | | 23.1 | 32.3 | 23.1 |
| Poly(ether-amide) block copolymer | | | | | | | | | | | | | 23.1 | 32.3 | 23.1 | | | |
| % gel at 10 MRad | 10.7 | 15.9 | 5.3 | 17.5 | 15.6 | 21.2 | 13.5 | 21.9 | 25.0 | 7.3 | 17.9 | 23.9 | 0.0 | 0.0 | 13.4 | 0.0 | 0.0 | 18.4 |
| % gel at 20 MRad | 12.7 | 18.4 | 8.1 | 20.6 | 16.8 | 21.8 | 15.3 | 23.7 | 26.1 | 10.7 | 20.1 | 24.7 | 0.0 | 0.0 | 13.8 | 0.0 | 0.0 | 20.5 |

TABLE 3

(I) Aromatic polymer/Cross-linking agent masterbatches (MB-I)

| Example No: | MB-I, 1 | MB-I, 2 | MB-I, 3 | MB-I, 4 |
|---|---|---|---|---|
| a) Polyarylsulphone | 90.0 | 90.0 | 90.0 | 80.0 |
| b) 2.2 Bis 4-(methacryloxy-ethoxy) phenyl propane | - | 6.5 | - | - |
| c) Acrylated Bis-phenol-A-Epoxy resin (1) | 6.5 | - | - | - |
| d) Acrylated Bis-phenol-A-Epoxy resin (2) | - | - | 10.0 | 20.0 |
| e) Polyhydroxy ether | 3.5 | 3.5 | - | - |
| f) Hydroquinone | 0.05 phr | 0.05 phr | 0.05 phr | 0.05 phr |

a) = Udel P1800, ex Union Carbide Inc.

b) = Diacryl 101, ex. Akzo Chemie

c) = Photomer 3016, ex. Diamond Shamrock

d) = Acrylated Araldite 6150, ex Ciba Geigy (UK)

e) = Phenoxy PKHH, ex Union Carbide

TABLE 3 (Contd.)

(II) Aliphatic Polymer masterbatches (MB-II)

| Example No: | MB-II, A | MB-II, B | MB-II, C | MB-II, D |
|---|---|---|---|---|
| a) Poly(ether-ester) block copolymer (1) | 64.0 | - | - | - |
| b) Poly(ether-ester) block copolymer (2) | - | - | 59.0 | 59.0 |
| c) Hydrolysis stabiliser | 10.0 | 10.0 | 15.0 | 15.0 |
| d) Polyhydroxyether | 24.0 | 24.0 | 24.0 | - |
| e) Polyarylcarbonate | - | - | - | 24.0 |
| f) Poly(ether-amide) block copolymer | - | 65.0 | - | - |
| g) N,N'Methylene-bis-acrylamide | 2.0 | 2.0 | 2.0 | 2.0 |

a) = Hytrel 4056, ex Du Pont De Nemours

b) = Hytrel 5555HS, ex." " " "

c) = Hytrel 10MS, ex " " " "

d) = Phenoxy PKHH, ex Union Carbide

e) = Orgalan I2500, ex Ato Chemie

f) = ELY 1256, ex Grillon (UK) Ltd.,

g) = MBA, ex American Cyanimid Co.,

TABLE 3 (Contd.)

(III) Final Compositions (EMP)

| Example No: | EMP 47 | EMP 25 | EMP 26 | EMP 31 | EMP 34 | EMP 38 | EMP 31(s) | EMP 44(s) | EMP 103 |
|---|---|---|---|---|---|---|---|---|---|
| Polyarylsulphone[(a)] | 80.0 | - | - | - | - | - | - | - | - |
| MB-I, 1 | - | 80.0 | 80.0 | - | - | - | - | - | - |
| MB-I, 2 | - | - | - | 80.0 | - | - | - | - | - |
| MB-I, 3 | - | - | - | - | 80.0 | - | - | 80.0 | - |
| MB-I, 4 | - | - | - | - | - | 80.0 | 80.0 | - | 80.0 |
| MB-II, A | - | 20.0 | - | 20.0 | 20.0 | 20.0 | - | - | - |
| MB-II, B | - | - | 20.0 | - | - | - | - | - | - |
| MB-II, C | 20.0 | - | - | - | - | - | 20.0 | - | - |
| MB-II, D | - | - | - | - | - | - | - | 20.0 | - |
| Poly(ether-ester) block copolymer[(b)] | - | - | - | - | - | - | - | - | 18.0 |
| Hydrolysis stabiliser[(c)] | - | - | - | - | - | - | - | - | 2.0 |
| N,N' methylene, bis acrylamide | - | - | - | - | - | - | - | - | 0.8 |

TABLE 4

Characteristics of EMP formulations listed in Table 3

| Code | Cross-linking Characteristics | | Expansion Characteristics at 220°C | | Heat Recovery Characteristics at 240°C | | Solvent Crazing Resistance |
|---|---|---|---|---|---|---|---|
| Example | Beam Dose (MRad) | % gel | Tensile Strength (MPa) | Elongation (%) | Draw Ratio | % unrecovered extension | Critical Strain in MEK (%) |
| Udel P1800 (Control 1) | 30 | 0 | Melts | >500 | 2:1 | 100 | <0.025 |
| EMP 47 (Control 2) | 30 | 0.5 | Melts | >500 | 2:1 | 95 | <0.1 |
| EMP 25 (s) | 30 | 15.1 | 0.21 | 485 | 2:1 | 8 | 0.5–0.6 |
| EMP 26 (s) | 20 | 8.2 | 0.20 | 246 | 2:1 | 5 | 0.35–0.4 |
| EMP 31 | 30 | 13.9 | 0.10 | 400 | 2:1 | 25 | 0.75–1.0 |
| EMP 34 | 30 | 15.2 | 0.40 | 250 | 3:1 | 9 | 1.1–2.0 |
| EMP 38 | 30 | 13.7 | 0.35 | 98 | 2:1 | 5 | 1.5–2.0 |
| EMP 31 (s) | 20 | 11.6 | 0.15 | 272 | 2:1 | 15 | 0.15–0.2 |
| EMP 103 | 20 | 21.9 | 0.39 | 135 | | | 1.0–1.5 |

(*) $\% \text{ unrecovered extension} = \frac{\text{Length after recovery} - \text{Length before expansion}}{\text{Length before expansion}} \times 100$

TABLE 5

Expansion/Recovery Data on Tubings

| EXAMPLE | BEAM DOSE (M Rads) | BLOW RATIO (:) | RECOVERY TEMP. (°C) | % UNRECOVERED STRAIN |
|---|---|---|---|---|
| EMP 34 (S) | 20 | 3:1 | 230 | 33 |
| '' | 20 | 3:1 | Air gun | 33 |
| EMP 34 (S) pre-dried | 10 | 2.2:1 | 210 | 8 |
| EMP 26 (S) | 20 | 2.2:1 | Air gun | 33 |
| '' | 20 | 2.2:1 | 250 | 50 |
| '' | 30 | 2.2:1 | 250 | 33 |
| EMP 103 | 10 | 2.2:1 | 220 | 8 |
| | 10 | 2.2:1 | Air gun | 8 |

TABLE 6

(I) Polyaryl sulphone/Cross-linking agent/phenolic diluent masterbatches (MB-I)

| | Example No: | MB-I, 5 | MB-I, 6 | MB-I, 7 | MB-I, 8 |
|---|---|---|---|---|---|
| a) | Polyarylsulphone | 79.5 | 79.5 | 79.5 | 79.5 |
| b) | Acrylated epoxy resin | 20.0 | 10.0 | 10.0 | 10.0 |
| c) | Unsaturated ester of alkoxylated Bisphenol A | - | 10.0 | - | - |
| d) | Dihydroxy diphenyl sulphone | - | - | 10.0 | - |
| e) | Novalac phenolic resin | - | - | - | 10.0 |
| f) | Phenolic antioxidant | 0.5 | 0.5 | 0.5 | 0.5 |
| g) | Hydroquinone | 0.02 phr | 0.02 phr | 0.02 phr | 0.02 phr |

a) = Udel P1800, ex Union Carbide Inc.

b) = Acrylated Araldite 6150, ex Ciba Geigy Ltd.,

c) = Diacryl 101, ex Akzo Chemie.

e) = Cellobond J1205G, ex BP Chemicals Ltd.

f) = Irganox 1010, ex Ciba Geigy

Table 6 (Contd.)

(II) Final Compositions (EMP)

| | Example No: | EMP 103 | EMP 104 | EMP 105 | EMP 106 | EMP 107 | EMP 108 | EMP 109 | EMP 110 |
|---|---|---|---|---|---|---|---|---|---|
| (i) | MB-I, 5 | 79.2 | 79.2 | - | - | - | - | - | - |
| (ii) | MB-I, 6 | - | - | 79.2 | 79.2 | - | - | - | - |
| (iii) | MB-I, 7 | - | - | - | - | 79.2 | 79.2 | - | - |
| (iv) | MB-I, 8 | - | - | - | - | - | - | 79.2 | 79.2 |
| (v) | Poly(ether-ester) block copolymer | 18.0 | - | 18.0 | - | 18.0 | - | 18.0 | - |
| (vi) | Poly(ether-amide) block copolymer | - | 18.0 | - | 18.0 | - | 18.0 | - | 18.0 |
| (vii) | Hydrolysis stabiliser | 2.0 | 2.0 | 2.0 | 2.0 | 2.0 | 2.0 | 2.0 | 2.0 |
| (viii) | N,N'methylene-bis acrylamide | 0.8 phr | 0.8 phr | 0.8 phr | 0.8 phr | 0.8 phr | 0.8 phr | 0.8 phr | 0.8 phr |

(v) Hytrel 4056, ex Du Pont de Nemours

(vi) ELY 1256, ex Grillon (UK) Ltd.

(vii) Hytrel 10MS, ex Du Pont de Nemours

Table 7

Characteristics of EMP formulations listed in Table 5

| Example | % gel | | Main Tg (°C) | | Mechanical Properties at 200°C: Tensile Strength (MPa) | | Mechanical Properties at 200°C: Elongation (%) | |
|---|---|---|---|---|---|---|---|---|
| | 10 MRad | 20 MRad | 10 MRad | 20 MRad | 10 MRad | 20 Mrad | 10 MRad | 20 MRad |
| EMP 103 | 20.0 | 21.9 | 160 | 165 | 0.44 | 0.39 | 113 | 134 |
| EMP 104 | | 20.4 | 151 | 153 | 0.16 | 0.44 | 350 | 292 |
| EMP 105 | 21.4 | 21.8 | 145 | 151 | 0.72 | 0.51 | 101 | 90 |
| EMP 106 | | 27.1 | 140 | 143 | 0.21 | 0.25 | 279 | 212 |
| EMP 107 | 13.7 | 15.6 | 148 | 148 | 0.37 | 0.19 | 222 | 232 |
| EMP 108 | | 13.6 | 158 | 158 | 0.09 | 0.19 | 464 | 650 |
| EMP 109 | 18.8 | 18.9 | 157 | 157 | 0.20 | 0.32 | 656 | 584 |
| EMP 110 | | 20.0 | 165 | 168 | 0.19 | 0.21 | 592 | 644 |

TABLE 8

Gel Content of polyarylsulphone/poly(ether-ester) block copolymer blends containing 9.2% of various types of cross-linking agents.

| Example No. | Composition | % Aliphatic polymer | % gel 10 MRad | % gel 20 MRad |
|---|---|---|---|---|
| 1) | Polyarylsulphone[(a)]/poly(ether-ester) block copolymer masterbatch[(b)] (Control 1) | 13.8 | 0.0 | 0.0 |
| 2) | " (Control 2) | 23.1 | 2.5 | 3.5 |
| 3) | " (Control 3) | 32.3 | 0.1 | 2.2 |
| 4) | Control 1 + Acrylated epoxy resin[(c)] | 13.8 | 13.1 | 14.1 |
| 5) | Control 2 + Acrylated epoxy resin[(c)] | 23.1 | 20.2 | 21.8 |
| 6) | Control 1 + 2,2-Bis 4-(meth-acryloxy-ethoxy)phenyl propane[(d)] | 13.8 | 2.8 | 3.6 |
| 7) | Control 2 + 2,2-Bis 4-(meth-acryloxy-ethyl)phenyl propane[(d)] | 23.1 | 12.8 | 15.4 |
| 8) | Control 1 + orthophthalic unsaturated polyester resin[(e)] | 13.8 | | |
| 9) | Control 2 + orthophthalic unsaturated resin[(e)] | 23.1 | | |
| 10) | Control 1 + isophthalic unsaturated polyester resin[(f)] | 13.8 | 7.1 | 7.5 |
| 11) | Control 2 + isophthalic unsaturated polyester resin[(f)] | 23.1 | 18.5 | 21.7 |
| 12) | Control 1 + terephthalic unsaturated polyester resin[(g)] | 13.8 | | |
| 13) | Control 2 + terephthalic unsaturated polyester resin[(g)] | 23.1 | | |
| 14) | Control 1 + Bisphenol-A unsaturated polyester resin[(h)] | 13.8 | 19.4 | 20.1 |
| 15) | Control 2 + Bisphenol-A unsaturated polyester resinE(h) | 23.1 | 25.0 | 27.3 |

TABLE 8 (Contd.)

| Example No. | Composition | % Aliphatic polymer | % gel 10 MRad | % gel 20 MRad |
|---|---|---|---|---|
| 16) | Control 1 + N,N¹m-phenylene dimaleimide (i) | 13.8 | | |
| 17) | Control 2+ N,N'm-phenylene dimaleimide (i) | 23.1 | 25.0 | 26.5 |
| 18) | Control 1 + Triallyl isocyanurate (1) | 13.8 | | |
| 19) | Control 2 + Triallyl isocyanurate (1) | 23.1 | 7.0 | 10.0 |
| 20) | Control 1 + N,N¹methylene bis acrylamide (m) | 13.8 | | |
| 21) | Control 2 + N,N¹methylene bis acrylamide (m) | 23.1 | 12.5 | 20.1 |

List of Components

a) Udel P1800 ex Union Carbide Inc.

b) Hytrel 4056 (90%)/Hytrel 10MS (10%) (ex Du Pont de Nemours) + MBA (3 phr)

c) Acrylated Araldite 6150 ex Ciba Geigy Ltd.

d) Diacryl 101 ex Akzo Chemie Ltd.

e) C 496 ex Scott Bader Ltd.

f) C 495 ex Scott Bader Ltd.

g) 490-05C60 Mo 341/1 base resin ex BP Chemicals Ltd.

h) Atlac 382E ex Atlas Chemicals Ltd.

i) HVA-2 ex Du Pont de Nemours

l) TAIC ex Mitsubishi Inc.
m) MBA ex American Cyanamid

TABLE 9

Mechanical Properties at 200°C of some of the compositions described in Table 8

| Example No. | Tensile Strength (MPa) 10 MRad | 20 MRad | Elongation % 10 MRad | 20 MRad |
|---|---|---|---|---|
| 2) Polyarylsulphone[(a)]/poly (ether-ester) block co-polymer masterbatch[(b)] | | | | |
| (Control 2) | 0.18 | 0.16 | 151 | 244 |
| 3) " (Control 3) | 0.11 | 0.12 | 182 | 539 |
| 5) Control 2 + Acrylated epoxy resin[(c)] | 0.48 | 0.47 | 150 | 166 |
| 7) Control 2 + 2,2-Bis 4-(methacryloxy-ethyl)phenyl propane[(d)] | - | 0.39 | - | 330 |
| 11) Control 2 + isophthalic unsaturated polyester resin[(f)] | | 0.33 | | 104 |
| 15) Control 2 + Bisphenol-A unsaturated polyester resin[(h)] | 1.02 | 1.02 | 50 | 58 |
| 17) Control 2 + N,N'-m-phenylene dimaleimide (i) | 0.89 | 0.98 | 103 | 110 |
| 21) Control 2 + N,N'-methylene bis acrylamide(m) | 0.36 | 0.44 | 67 | 95 |

TABLE 10

Mechanical properties at 200°C of binary blends of poly(ether-ester) block copolymers masterbatches (HYTREL-MB) and a number of cross-linking agents at 20% concentration.

| | Composition | Tensile Strength (MPa) 10 MRad | Tensile Strength (MPa) 20 MRad | Elongation at break (%) 10 MRad | Elongation at break (%) 20 MRad |
|---|---|---|---|---|---|
| (i) | HYTREL-MB[(a)]/bis-phenol A unsaturated polyester resin[(b)] | 1.54 | | 17 | |
| (ii) | HYTREL-MB/N,N'-m-phenylene dimaleimide[(c)] | | 1.52 | | 25 |
| (iii) | HYTREL-MB/N,N'methylene bis-acrylamide[(d)] (MBA) | | 1.73 | | 18 |
| (iv) | HYTREL-MB/isophthalic unsaturated polyester resin[(e)] | 1.02 | | 58 | |
| (v) | HYTREL-MB/bis 4-(methacryloxy-ethoxy)phenyl propane[(f)] | | 1.26 | | 26 |

(a) HYTREL 4056 (90%)/HYTREL 10MS (10%) ex Du Pont + 3 phr MBA
(b) Atlac 382E ex Atlac Chemicals
(c) HVA-2 ex Du Pont
(d) MBA ex American Cyanamid
(e) C495 ex Scott Bader Ltd.
(f) Diacryl 101 ex Akzo Chemie

TABLE 11

Blends of aromatic polymers with poly(ether-ester) block copolymers and a variety of cross-linking agents

Composition (concentrations as described in Example 6, unless otherwise stated).

| Example No. | | % 10 MRad | 20 MRad |
|---|---|---|---|
| X1) | Polyarylethersulphone,[(a)] PES, (76.9%)/poly(ether-ester) block copolymer masterbatch(b), HYTREL MB, (23%) - Control 1. | 0.0 | 2.3 |
| X2) | PES (67.7%)/HYTREL-MB (32.3%) - Control 2 | 3.5 | 15.1 |
| X3) | PES/acrylated epoxy resin[(c)]/HYTREL-MB | 15.7 | 17.8 |
| X4) | PES/orthophthalic unsaturated polyester resin[(d)]/ HYTREL-MB | 20.0 | 22.3 |
| X5) | PES/terephthalic unsaturated polyester resin[(e)]/ HYTREL-MB | 21.9 | 24.2 |
| X6) | PES/bis-phenol-A unsaturated polyester resin[(f)]/ HYTREL-MB | 12.5 | 18.8 |
| X7) | Polyarylether-imide[(g)], PEI, (76.9%)/HYTREL-MB (23.1%) - Control 3. | 2.55 | 5.9 |
| X8) | PEI (67.7%)/HYTREL-MB (32.3%) - Control 4 | 3.14 | 17.0 |
| X9) | PEI/acrylated epoxy resin/HYTREL-MB | 22.7 | 22.6 |
| X10) | PEI/orthophthalic unsaturated polyester resin/ HYTREL-MB | 15.0 | 16.0 |
| X11) | PEI/terephthalic unsaturated polyester resin/ HYTREL-MB | 22.6 | 24.2 |
| X12) | PEI/bisphenol A unsaturated polyester resin/ HYTREL-MB | 26.0 | 23.8 |
| X13) | Polyarylate(h), PAR, (76.9%9/HYTREL-MB (23.1%) Control 5 | 2.4 | 1.2 |
| X14) | PAR (67.7%)/HYTREL-MB (32.3%) - Control 6 | 1.1 | 1.1 |
| X15) | PAR/acrylated epoxy resin/HYTREL-MB | 13.7 | 13.7 |

TABLE 11 (Contd.)

a) = Victrex P200, ex ICI Ltd.

b) = Hytrel 4056 (90%)/Hytrel 10 MS (10%), ex Du Pont + 3 phr N,N' bis-methylene acrylamide

c) = Acrylated Araldite 6150, ex Ciba Geigy

d) = Ref. C496, ex Scott Bader Ltd.

e) = Ref. C495, ex Scott Bader Ltd.

f) = Atlac 382E, ex Atlac Chemicals Ltd.

g) = Ultem, ex General Electric Company

h) = Arylef U 100, ex Laporte Industries Ltd.

TABLE 12

Composition and gellation characteristics of formulations based on a polyaryl sulphone (PASO), an acrylated epoxy resin (AEPR) and a variety of aliphatic polymers

| Example No: | | Y1 | Y2 | Y3 | Y4 | Y5 | Y6 | Y7 | Y8 | Y9 | Y10 |
|---|---|---|---|---|---|---|---|---|---|---|---|
| 1) Polyaryl sulphone | | 80.0 | 67.5 | 80.0 | 67.5 | 80.0 | 67.5 | 80.0 | 67.5 | 80.0 | 67.5 |
| 2) Acrylated epoxy resin | | 0.0 | 12.5 | 0.0 | 12.5 | 0.0 | 12.5 | 0.0 | 12.5 | 0.0 | 12.5 |
| 3) Polyethylene glycol | | 20.0 | 20.0 | - | - | - | - | - | - | - | - |
| 4) Epichlorohydrin rubber | | - | - | 20.0 | 20.0 | - | - | - | - | - | - |
| 5) Fluoroelastomer | | - | - | - | - | 20.0 | 20.0 | - | - | - | - |
| 6) Vinylacetate-ethylene copolymer | | - | - | - | - | - | - | 20.0 | 20.0 | | |
| 7) Polypropylene oxide elastomer | | - | - | - | - | - | - | - | - | 20.0 | 20.0 |
| % gel | 10 MRad | 1.2 | 19.3 | 0.5 | 15.2 | 1.5 | 6.6 | 14.7 | 25.9 | 0.0 | 10.6 |
| | 20 MRad | 1.1 | 18.3 | 0.7 | 15.9 | 2.1 | 14.9 | 17.1 | 26.4 | 0.5 | 7.5 |

Footnote Source of materials used.

1) = Udel P1800, ex Union Carbide inc.
2) = Acrylated Araldite 6150, ex Ciba Geigy
3) = Polyox WSR 205, ex Union Carbide
4) = Hydrin 400, ex Goodrich Chemical (UK) Ltd.
5) = Viton A35, ex Du Pont de Nemours
6) = VAE 711, ex Wacker Chemie
7) = Parel 58, ex Hercules

TABLE 13

Compositions and gellation characteristics of formulations based on mixtures of aromatic polymers, an acylate epoxy resin and a poly(ether-ester) copolymer masterbatch

| | 1 | 2 | 3 | 4 | 5 | 6 |
|---|---|---|---|---|---|---|
| 1) Polysulphone | 23.07 | 53.83 | 20.31 | 47.39 | 20.31 | 47.39 |
| 2) Polyether-imide | 53.83 | 23.07 | 47.39 | 20.31 | 47.39 | 20.31 |
| 3) Acrylated epoxy resin | - | - | - | - | 9.20 | 9.20 |
| 4) Poly(ether-ester) block copolymer masterbatch | 23.10 | 23.10 | 32.30 | 32.30 | 23.10 | 23.10 |
| % gel | | | | | | |
| 10 MRad | 0.0 | 0.0 | 0.21 | 0.32 | 15.20 | 18.9 |
| 20 MRad | 0.99 | 5.5 | 9.6 | 12.10 | 21.67 | 20.17 |

Foot Note Source of materials used.

1) Udel P1800, ex Union Carbide Inc.
2) Ultem, ex general electric Co.
3) Acrylated Araldite 6150, ex Ciba Geigy
4) Hytrel 4065 (90%)/Hytrel 10MS (10%) ex DuPont = 3 phr N,N' m phenylene dimaleimide

TABLE 14

Glass transition temperature (Tg) of mixtures of poly(ether-ester) block copolymer with a number of cross-linking agents, as measured by DMA.

| Polymer Mixture | Tg (°C) |
|---|---|
| Hytrel 4056 control | - 52 |
| Hytrel 4056 + 20% AA6150[(a)] | - 28 |
| Hytrel 4056 + 20% ISO-[(b)] | - 41 |
| Hytrel 4056 + 20% Atlac 382E[(c)] | - 22 |
| Hytrel 4056 + 20% Ortho-[(d)] | - 40 |
| Hytrel 4056 + 20% Tere-[(e)] | - 40 |

(a) = Acrylated Bis-phenol-A epoxy resin (Acrylated Araldite 6150 - ex Ciba Geigy)

(b) = Isophthalic unsaturated polyester resin (ex Scott Bader, Ref. C495)

(c) = Alkoxy — bis-phenol-A fumarate resin (ex Atlac Chemicals)

(d) = Orthophthalic unsaturated polyester resin (ex Scott Bader)

(e) = Terephthalic unsaturated polyester resin (ex BP Chemicals, 490-05C MO341/1)

TABLE 15

Comparison of cross-linking efficiency of poly(ether-ester) block copolymer (Hytrel 4056) with (a) an incompatible cross-linking agents, (b) compatible cross-linking agents, and (c) a mixture of incompatible and compatible cross-linking agents.

| Polymer mixture | % gel | |
|---|---|---|
| | 10 MRads | 20 MRads |
| Hytrel 4056 + 0.5% MBA[(a)] | 33.4 | 56.1 |
| '' + 1.0% '' | 36.0 | 62.6 |
| '' + 3.0% '' | 72.4 | 77.1 |
| '' + 10.0% '' | 80.8 | 84.6 |
| Hytrel 4056 + 1.0% AA6150[(b)] | 29.0 | 42.6 |
| '' + 3.0% '' | 38.6 | 51.3 |
| '' + 5.0% '' | 41.4 | 53.2 |
| '' + 10.0% '' | 60.6 | 61.9 |
| '' + 28.5% '' | 74.9 | 72.0 |
| Hytrel 4056 + 1.0% ISO[(c)] | 23.4 | 57.5 |
| '' + 3.0% '' | 35.7 | 58.2 |
| '' + 5.0% '' | 50.9 | 65.2 |
| '' + 10.0% '' | 53.1 | 56.4 |
| '' + 28.5% '' | 55.7 | 74.9 |

TABLE 15 (Contd.)

| Polymer mixture | % gel | |
|---|---|---|
| | 10 MRads | 20 MRads |
| Hytrel 4056 + 20% TAIC[(d)] | 44.0 | 65.5 |
| Hytrel 4056 + 20% Diacryl 101[(e)] | 54.2 | 53.6 |
| Hytrel 4056 + 30% AA6150[(b)] + 3phr MBA[(a)] | 81.7 | 85.5 |
| Hytrel 4056 + 30% ISO-[(c)] + 3phr MBA[(a)] | 77.6 | 82.1 |
| Hytrel 4056 + 28.5% TAIC[(g)] + 3phr MBA[(a)] | 63.8 | 85.4 |
| Hytrel 4056 + 20.0% Diacryl 101[(e)] + 3phr MBA[(a)] | 78.5 | 89.0 |

(a) = N,N' methylene bis-acrylamide

(b) = Acrylated bis-phenol-A epoxy resin (acrylated Araldite 6150 ex Ciba Geigy)

(c) = Isophthalic unsaturated polyester resin (ex Scott Bader, Ref. C495)

(d) = Triallyl isocyanurate

(e) = 2,2' Bis 4-(methacryloxy-ethoxy-phenyl propane) (ex Akzo Chemicals)

(g) = Alkoxy - bis-phenol-A fumarate resin (ex Atlas Chemicals)

The following trade names used in the foregoing description are believed to be Registered Trade Marks in at least some of the countries subject to the Eurpopean Patent Convention:—

Orgalan, Arylef, Hypalon, Vamac, Ely, Pebax, Davathane, Hydrin, Parel, Atlac, Photomer, Thermid, Ricon, Rheomix, Hytrel, Udel, Victrex, Ultem, DYNH, Kynar, Leistritz, Instron, Solef, Diacryl, Santomer, Araldite, Santicizer, Santolite, Cellobond, Irganox, Polyox, Viton.

**Claims**

1. A composition comprising a mixture of

(A) substantially non-crystalline thermoplastic polysulphone, polyethersulphone or polyetherimide;

(B) aliphatic polymer material as a substantially continuous phase having a molecular weight of at least 10000, comprising one or more polymers selected from polyolefins, silicone elastomers, polyacrylate elastomers, fluoropolymers, hydrogenated polystyrene-diene block copolymers, linear thermoplastic polyesters, polyamides, thermoplastic polyurethanes and polyalkylene oxide elastomers;

(C) cross-linking agent capable of cross-linking the aliphatic polymer material (B), at least part of the cross-linking agent itself being incorporated in the resulting cross-links, comprising one or more materials selected from unsaturated esters of alkoylated dihydric phenols, esterified bis-phenol epoxy resins, esterified epoxidised novolac resins, unsaturated imides, multifunctional acrylic monomers and telomers, multifunctional alkyl esters, and unsaturated urethane oligomers, 1,2-polybutadienes and acetylene terminated oligomers,

in proportions by weight, based on the total weight of the composition, of 40 to 90% of (A), 6 to 55% of (B), and 2 to 30% of (C).

2. A composition according to claim 1 comprising 55 to 80% of (A), 10 to 35% of (B), and 6 to 20% of (C).

3. A composition according to claim 2 comprising 15 to 30% of (B).

4. A composition according to any of the preceding claims, wherein the cross-linking agent is capable of reacting to give a gel content of at least 2% in the total composition.

5. A composition according to claim 4, wherein the gel content is at least 5%.

6. A composition according to claim 5, wherein the gel content is at least 15%.

7. A composition according to any preceding claim which is melt-processed.

8. A composition according to any of the preceding claims, wherein the cross-linking agent is capable of cross-linking the aliphatic polymer material when the composition is subjected to high energy electron beam radiation, gamma radiation or UV radiation.

9. A composition according to any of the preceding claims, additionally comprising one or more polymers selected from polyaryletherketones, polyphenylene sulphides and aromatic polyamideimides, the total amount of such additional polymer plus component (A) being within the ranges specified for component (A).

10. A composition according to any one of the preceding claims, wherein the aliphatic polymer material (B) has a molecular weight of at least 20000.

11. A composition according to any of the preceding claims wherein the cross-linking agent (C) is or includes a monomer or oligomer having a molecular weight less than 20000.

12. A composition according to any of the preceding claims, wherein the cross-linking agent (C) has at least two reactive groups capable of reacting with the aliphatic polymer material (B), which reactive groups contain aliphatic unsaturation.

13. A composition according to any of the preceding claims wherein the cross-linking agent (C) is compatible with at least one aromatic polymer in the aromatic polymer material (A) in the sense that the said aromatic polymer in a binary mixture (A) and (C) has a glass transition temperature lower than that of (A) alone.

14. A composition according to any of the preceding claims wherein

a) the aromatic polymer is a polyaryl sulphone or polyarylethersulphone,

b) the aliphatic polymer, or mixture of aliphatic polymers, is selected from the series: poly(ether-ester) block compolymer, poly(ether-amide) block copolymer, polyacrylate elastomer, polyvinylidene fluoride homopolymers and copolymers, ethylene copolymers, chlorinated polyethylene, chlorosulphonated polyethylene and chlorotrifluoroethylene copolymers.

c) the cross-linking agent or mixture of crosslinking agents is selected from the series: 2,2-bis-4-(methacryloxy-ethoxy) phenyl propane; 2,2-bis-4-(acryloxy-ethoxy)phenyl propane; acrylated bis-phenol epoxy resin; orthophthalic-, isophtalic- and terephathalic unsaturated polyester resins; alkoxy-bis phenol A unsaturated polyester resin; polystyryl pyridyl resin; N,N'm-phenylene dimaleimide; polyethylene glycol dimethacrylate; triallyl isocyanurate; tris(2-methacryloxy ethyl isocyanurate); tris(2-acryloxy ethyl isocyanurate); N,N' methylene bis acrylamide; N,N'ethylene bis acrylamide.

15. A composition according to any of claims 1 to 13 in which

a) the aromatic polymer is a polyaryl etherimide;

b) the aliphatic polymer or a mixture of aliphatic polymers, is selected from the series: poly(ether-ester) block copolymers, poly(ether-amide) block copolymer, polyvinyledene fluoride homopolymer and copolymers, ethylene copolymers, chlorinated polyethylene, acrylate elastomer and chlorotrifluoroethylene copolymers,

c) the cross-linking agent or mixture of cross-linking agents, is selected from 2,2-bis-4-(methacryloxy-ethoxy) phenyl propane; 2,2-bis 4-(acryloxy-ethoxy) phenyl propane; ortho-phthalic, isophthalic, terephthalic and alkoxy-bis phenol-A unsaturated polyester resins; triallyl isocyanurate; N,N'm-phenylene dimaleimide; polyethylene glycol dimethylacrylate; N,N'-methylene-bis-acrylamide and N,N'ethylene-bis-acrylamide.

16. A composition according to claim 15 containing in addition a polyhydroxyether material, or a polyalkylene terephthalate or the equivalent copolyesters, i.e. esters that contain a minor amount e.g. from 0.5 to 2% of repeating units derived from an aliphatic or another aromatic dicarboxylic acid and/or another aliphatic diol and polyol, at levels up to 50%, the total amount of polyhydroxyether, polyalkylene terephthalate or other copolyesters together with the component (B) being within the ranges specified for component (B).

17. A composition according to any of claims 1 to 13 which comprises (A) a polysulphone or polyethersulphone (B) a poly(ether-ester) block copolymer, and (C) an acylated bisphenol epoxy resin.

18. A composition according to claim 17, additionally containing either a vinylidene fluoride/hexafluoropropylene copolymer, a propylene/tetrafluoroethylene copolymer, or an ethylene/propylene terpolymer, the total amount of such additional polymer together with the said block copolymer (B) being within the ranges specified for component (B).

19. A composition according to any of the preceding claims, additionally containing a non-reactive diluent having a molecular weight less than 20,000, selected from toluene sulphonic acid derivatives, arylsulphonamide resins, novolac phenol-formaldehyde resins, bisphenol S and its derivatives, 4,4'-dichlorodiphenyl sulphone and its derivatives, 4,4'-diaminodiphenyl sulphone and its derivatives, fully saturated forms of the cross-linking agents (C), and tackifying resins, the total amount of diluent and component (C) being within the ranges specified for (C).

20. A composition according to any of the preceding claims, comprising, in addition to the cross-linking agent (C), polyhydroxy ether material, the total amount of (C) and the polyhydroxy ether material being within the ranges specified for (C).

21. A composition according to any of the preceding claims wherein the cross-linking agent (C) has been reacted with the aliphatic polymer (B) to give a cross-linked composition.

22. A composition according to claim 21 which has been cross-linked by electron beam irradiation to a dose of up to 50 MRads.

23. A composition according to claim 21 or 22 in the form of an article which has been deformed to and is retained in a heat recoverable state.

24. A composition according to any one of the preceding claims in the form of a heat-recoverable filament.

**Patentansprüche**

1. Zusammensetzung, enthaltend eine Mischung aus den Komponenten

(A) im wesentlichen nicht-kristallinem thermoplastischen Polysulfon, Polyethersulfon oder Polyetherimid;

(B) aliphatischem polymeren Material als eine im wesentlichen kontinuierliche Phase, das ein Molekulargewicht von mindestens 10 000 aufweist, und das ein oder mehrere Polymere ausgewählt aus der Gruppe Polyolefine, Silicon-Elastomere, elastomere Polyacrylate Fluorpolymere, hydrierte Polystyrol-dien-Blockcopolymere lineare thermoplastische Polyester, Polyamide, thermoplastische Polyurethane und Polyalkylenoxid-Elastomere, enthält;

(C) vernetzendem Agens, das zur Vernetzung des aliphatischen polymeren Materials (B) fähig ist, wobei das vernetzende Agens zumindest zum Teil selbst in die resultierenden Vernetzungsketten eingeht, enthaltend ein oder mehrere Materialien, ausgewählt aus der Gruppe ungesättigte Ester von veretherten Dihydroxphenolen, veresterte Diphenol-Epoxy-Harze, veresterte epoxidierte Novolak-Harze, ungestättigte Imide, multifunktionelle Acrylmonomere und -telomere, multifunktionelle Alkylester und ungesättigte Urethan-Oligomere, 1,2-Polybutadiene und mit Acetylen endende Oligomere,
und zwar in Gewichtsanteilen, bezogen auf das Gesamtgewicht der Zusammensetzung, von 40 bis 90% an (A), 6 bis 55% an (B) und 2 bis 30% an (C).

2. Zusammensetzung nach Anspruch 1, enthaltend 55 bis 80% Komponente (A), 10 bis 35% Komponente (B) und 6 bis 20% Komponente (C).

3. Zusammensetzung nach Anspruch 2, enthaltend 15 bis 30% Komponente (B).

4. Zusammensetzung nach einem der vorangehenden Ansprüche, wobei das vernetzende Agens fähig ist, so zu reagieren, daß ein Gel-Gehalt von mindestens 2% in der Gesamt-Zusammensetzung erreicht wird.

5. Zusammensetzung nach Anspruch 4, wobei der Gel-Gehalt mindestens 5% beträgt.

6. Zusammensetzung nach Anspruch 5, wobei der Gel-Gehalt mindestens 15% beträgt.

7. Zusammensetzung nach einem der vorangehenden Ansprüche, die schmelzverarbeitet ist.

8. Zusammensetzung nach einem der vorangehenden Ansprüche, in welcher das vernetzende Agens in der Lage ist, das aliphatische polymere Material zu vernetzen, wenn die Zusammensetzung Hochenergie-Elektronenstrahl-Strahlung, Gamma-Strahlung oder UV-Strahlung unterworfen wird.

9. Zusammensetzung nach einem der vorangehenden Ansprüche, die zusätzlich ein oder mehrere Polymere, ausgewählt aus der Gruppe Polyaryletherketone, Polyphenylensulfide und aromatische Polyamidimide enthält, wobei die Gesamtmenge an solchem zusätzlichen Polymeren plus Komponente (A) in den für Komponente (A) angegebenen Bereichen liegt.

10. Zusammensetzung nach einem der vorangehenden Ansprüche, in welcher das aliphatische

polymere Material (B) ein Molekulargewicht von mindestens 20 000 hat.

11. Zusammensetzung nach einem der vorangehenden Ansprüche, in welcher das vernetzende Agens (C) ein Monomer oder ein Oligomer mit einem Molekulargewicht von weniger als 20 000 ist oder enthält.

12. Zusammensetzung nach einem der vorangehenden Ansprüche, in welcher das vernetzende Agens (C) mindestens zwei reaktive Gruppen aufweist, die geeignet sind, mit dem aliphatischen polymeren Material (B) zu reagieren, wobei die reaktiven Gruppe aliphatische Unsättigung enthalten.

13. Zusammensetzung nach einem der vorangehenden Ansprüche, in welcher das vernetzende Agens (C) mit mindestens einem aromatischen Polymer in dem aromatischen polymeren Material (A) kompatibel ist, derart, daß das genannte aromatische Polymer in einem binären Gemisch (A) und (C) eine Glas-Übergangstemperatur hat, die niedriger ist als die von (A) allein.

14. Zusammensetzung nach einem der vorangehenden Ansprüche, in welcher

a) das aromatische Polymer ein Polyarylsulfon oder Polyarylethersulfon ist;

b) das aliphatische Polymer, oder die Mischung aliphatischer Polymere, ausgewählt ist aus den Gruppen: Poly-(ether-ester)-Blockcopolymer, Poly-(ether-amid)-Blockcopolymer, elastomeres Polyacrylat, Polyvinylidenfluorid-Homopolymere und Copolymere, Ethylen-Copolymere, chloriertes Polyethylen, chlorsulfoniertes Polyethylen und Chlortrifluoroethylen-Copolymere;

c) das vernetzende Agens oder die Mischung von vernetzenden Agenzien ist ausgewählt aus den Gruppen: 2,2-Bis-4-(methacryloxy-ethoxy)-phenylpropan; 2,2-Bis-4-(acryloxy-ethoxy)-phenylpropan; acryliertes Bis-phenolepoxyharz; Orthophthal-, Isophthal- und Terephthal-ungesättigte-Polyesterharze; Alkoxy-bisphenol-A-ungesättigtes Polyesterharz; Polystyrol-Pyridyl-Harz; N,N'-m-Phenylendimaleimid; Polyethylenglykoldimethylacrylat; Triallylisocyanurat; Tri-(2-methacryloxy-ethyl-isocyanurat; Tri-(2-acryloxy-ethyl-)isocyanurat; N,N'-Methylen-bis-acrylamid; N,N'-Ethylen-bis-acrylamid.

15. Zusammensetzung nach einem der Ansprüche 1 bis 13, in welcher

a) das aromatische Polymer ein Polyaryletherimid ist;

b) das aliphatische Polymer oder eine Mischung der aliphatischen Polymere aus den folgenden Gruppen ausgewählt ist: Poly-(ether-ester)-Blockcopolymere, Poly-(ether-amid)-Blockcopolymere, Polyvinylidenfluorid-Homopolymere und -Copolymere, Ethylenecopolymere, chloriertes Polyethylen, Acrylelastomers und Chlortrifluorethylen-Copolymere;

c) das vernetzende Agens oder eine Mischung von vernetzenden Agenzien ist ausgewählt aus 2,2-bis-4-(methacryloxy-ethoxy)-phenylpropan; 2,2-bis-4-(acryloxy-ethoxy)-phenylpropan; Orthophthal-, Isophthal-, Terephthal- und Alkoxy-bis-phenol-A-ungesättigte Polyesterharze; Triallylisocyanurat; N,N'-m-Phenylendimaleimid; Polyethylenglykoldimethylacrylat; N,N'-Methylen-bis-acrylamid und N,N'-Ethylen-bis-acrylamid.

16. Zusammensetzung nach Anspruch 15, zusätzlich enthaltend ein Polyhydroxyether-Material oder ein Polyalkyleneterephthalat oder die äquivalenten Copolyester, d.h. Ester, die eine geringe Menge, beispielsweise 0,5 bis 2%, von sich wierderholenden Einheiten, abgeleitet von einer aliphatischen oder einer anderen aromatischen Dicarbonsäure und/oder einem anderen aliphatischen Diol und Polyol in Mengen bis zu 50% enthalten, wobei die Gesamtmenge an Polyhydroxyether, Polyalkylenterephthalat oder anderen Copolyestern zusammen mit der Komponente (B) in den für die Komponente (B) angegebenen Bereichen liegt.

17. Zusammensetzung nach einem der Ansprüche 1 bis 13, welche als Komponente (A) ein Polysulfon oder Polyethersulfon, als Komponente (B) ein Poly(ether-ester)-Blockcopolymer und als Komponente (C) ein acryliertes Bisphenol-Epoxyharz enthält.

18. Zusammensetzung nach Anspruch 17, welche zusätzlich entweder ein Vinylidenfluorid/Hexafluoropropylen-Copolymer, ein Propylen-tetrafluroethylencopolymer oder ein Ethylen/Propylen-Terpolymer enthält, wobei die Gesamtmenge an zusätzlichem Polymer zusammen mit dem Blockpolymer (B) in den für Komponente (B) angegebenen Bereichen liegt.

19. Zusammensetzung nach einem der vorangehenden Ansprüche, welche zusätzlich ein nichtreaktives Verdünnungsmittel mit einem Molekulargewicht von weniger als 20 000, das ausgewählt is aus Toluolsulfonsäurederivaten, Acrylsulfonamid-Harzen, Novolak-Phenol-Formaldehydharzen, Bisphenol-S- und seinen Derivaten, 4,4'-Dichlorodiphenylsulfon und seinen Derivaten, 4,4'-Diaminodiphenylsulfon und seinen Derivaten, vollständig gesättigten Formen der vernetzenden Agenzien (C) und klebrig-machenden Harzen, wobei die Gesamtmenge an Verdünnungsmittel und Komponente (C) in den für (C) angegebenen Bereichen liegen.

20. Zusammensetzung nach einem der vorangehenden Ansprüche, welche zusätzlich zu dem vernetzenden Agens (C), Polyhydroxyether-Material enthält, wobei die Gesamtmenge an Komponente (C) und dem Polyhydroxyether-Material in den für Komponente (C) angegebenen Bereichen liegt.

21. Zusammensetzung nach einem der vorangehenden Ansprüche, in welcher das vernetzende Agens (C) mit dem aliphatischen Polymer (B) zu einer vernetzten Zusammensetzung reagiert hat.

22. Zusammensetzung nach Anspruch 21, in welcher die Vernetzung durch Elektronenstrahlt-Bestrahlung mit einer Dosis von bis zu 150 MRad erreicht wurde.

23. Zusammensetzung nach Anspruch 21 oder 22 in Form eines Gegenstandes, der in einen durch Wärme rückstellbaren Zustand verformt worden ist und in diesem Zustand gehalten wird.

24. Zusammensetzung nach einem der vorangehenden Ansprüche in Form eines durch Wärme rückstellbaren Filaments.

**Revendications**

1. Composition comprenant un mélange de

(A) une polysulfone, une polyéthersulfone ou un polyétherimide thermoplastique, pratiquement non cristallin;

(B) une substance polymère aliphatique sous forme d'une phase pratiquement continue, ayant une masse moléculaire d'au moins 10 000, comprenant un ou plusieurs polymères choisi(s) parmi des polyoléfines, des élastomères silicone, des élastomères polyacrylate, des polymères fluorés, des copolymères séquencés polystyrène/diène hydrogénés, des polyesters thermoplastiques linéaires, des polyamides, des polyuréthannes thermoplastiques et des élastomères de polyoxyalkylène;

(C) un agent de réticulation capable de réticuler la substance polymère aliphatique (B), au moins une partie de l'agent de réticulation lui-même étant incorporée dans le réseau résultant, comprenant un ou plusieurs substances choisie(s) parmi des esters insaturés de diphénols alcoxylés, des résines époxy à base de bisphénol estérifié, des résines Novolaque époxydées estérifiées, des imides insaturés, des monomères et télomrères acryliques polyfonctionnels, des esters alkyliques polyfonctionnels et oligomères d'uréthanne insaturés, des 1,2-polybutadiènes et des oligomères à terminaison acétylénique;
en proportions en poids, par rapport au poids total de la composition, de 40 à 90% de (A), 6 à 55% de (B) et 2 à 30% de (C).

2. Composition selon la revendication 1, comprenant de 55 à 80% de (A), de 10 à 35% de (B), et de 6 à 20% de (C).

3. Composition selon la revendication 2, comprenant de 15 à 30% de (B).

4. Composition selon l'une quelconque des revendications précédentes, dans laquelle l'agent de réticulation est capable de réagir pour donner une teneur en gel d'au moins 2% dans la composition totale.

5. Composition selon la revendication 4, dans laquelle la teneur en gel est d'au moins 5%.

6. Composition selon la revendication 5, dans laquelle la teneur en gel est d'au moins 15%.

7. Composition selon l'une quelconque des revendications précédentes, laquelle est traitée à l'état fondu.

8. Composition selon l'une quelconque des revendications précédentes, dans laquelle l'agent de réticulation est capable de réticuler la substance polymère aliphatique lorsqu'on soumet la composition à un rayonnement d'un faisceau d'électrons à haute énergie, un rayonnement gamma ou un rayonnement UV.

9. Composition selon l'une quelconque des revendications précédentes, comprenant en outre un ou plusieurs polymères choisis parmi des polyaryléthercétones, des poly(sulfures de phénylène) et des polyamide-imides aromatiques, la quantité totale de ce polymère supplémentaire et du composant (A) étant dans les plages spécifiées pour le composant (A).

10. Composition selon l'une quelconque des revendications précédentes, dans laquelle la substance polymère aliphatique (B) a une masse moléculaire d'au moins 20 000.

11. Composition selon l'une quelconque des revendications précédentes, dans laquelle l'agent de réticulation (C) est ou comprend un monomère ou oligomère ayant une masse moléculaire inférieure à 20 000.

12. Composition selon l'une quelconque des revendications précédentes, dans laquelle l'agent de réticulation (C) comporte au moins deux groupes réactifs capables de réagir avec la substance polymère aliphatique (B), lesquels groupes réactifs contiennent une insaturation aliphatique.

13. Composition selon l'une quelconque des revendications précédentes, dans laquelle l'agent de réticulation (C) est compatible avec au moins un polymère aromatique dans la substance polymère aromatique (A), au sens où ledit polymère aromatique dans un mélange binaire de (A) et (C) a une température de transition vitreuse inférieure à celle de (A) seul.

14. Composition selon l'une quelconque des revendications précédentes, dans laquelle

a) le polymère aromatique est une polyarylsulfone ou une polyaryléthersulfone;

b) le polymère aliphatique ou mélange de polymères aliphatiques est choisi parmi un copolymère séquencé poly(éther-ester), un copolymère séquence poly(éther-amide), un élastomère polyacrylate, des homopolymères et copolymères de de fluorure de polyvinylidène, des copolymères, d'éthylène, un polyéthylène chloré, un polyéthylène chlorosulfoné et des copolymères de chlorotrifluoroéthylène;

c) l'agent de réticulation ou mélange d'agents de réticulation est choisi parmi le 2,2-bis-4-(méthacryloxy-éthoxy)phenylpropane, le 2,2-bis-4-(acryloxy-éthoxy)phénylpropane, une résine époxy à base de bisphénol acrylaté, des résines de polyester insaturé à base d'acide orthophtalique, isophtalique on téréphtalique, une résine de polyester insaturé à base d'alcoxy-bishphénol A, une résine polystyrylpyridyle, le N,N'-m-phénylènedimaléimide, le diméthacrylate de polyéthylèneglycol, l'isocyanurate de triallyle, l'isocyanurate de tris(2-méthacryloxyéthyle), l'isocyanurate de tris(2-acryloxyéthyle), le N,N'-méthlène-bisacrylamide, le N,N'-éthylène-biscarylamide.

15. Composition selon l'une quelconque des revendications 1 à 13, dans laquelle

a) le polymère aromatique est un polyaryl-étherimide;

b) le polymère aliphatique ou mélange de polymères aliphatiques est choisi parmi des molymères séquencés poly(éther-ester), des copolymères séquencés (éther-amide), des homopolymères et

copolymères de fluorure de polyvinylidène, des copolymères d'éthylène, un polyéthylène chloré, des élastomères acrylate et des copolymères de chlorotrifluoroéthylène;

c) l'agent de réticulation ou mélange d'agents de réticulation est choisi parmi le 2,2-bis-4-(méthacryloxy-éthoxy)phénylpropane, le 2,2-bis-4-(acryloxy-éthoxy)phénylpropane, des résines de polyester insaturé à base d'alcoxy-bisphénol A et d'acide orthophtalique, isophtalique ou téréphtalique, l'isocyanurate de triallyle, le N,N'-m-phénylène-dimaléimide, le diméthacrylate de poly éthylèneglycol, le N,N'-méthylène-bisacrylamide et le N,N'-éthylène-bisacrylamide.

16. Composition selon la revendication 15, contenant en outre un polyhydroxyéther ou un polytéréphtalate d'alkylène ou les copolyesters correspondants, c'est-à-dire des esters qui contiennent une faible quantité, par exemple de 0,5 à 2%, de motifs répétitifs provenant d'un acide dicarboxylique aromatique aliphatique ou d'un autre acide dicarboxylique aromatique et/ou d'un autre diol ou polyol aliphatique, en quantités allant jusqu'à 50%, la quantité totale du polyhydroxyéther, du polytéréphtalate d'alkylène ou d'autres copolyesters, conjointement avec le composant (B), étant dans les plages spécifiées pour le composant (B).

17. Composition selon l'une quelconque des revendications 1 à 13, laquelle comprend (A) une polysulfone ou polyéthersulfone, (B) un copolymère séquencé poly(éther-ester), et (C) une résine époxy à base de bisphénol acrylaté.

18. Composition selon la revendication 17, contenant en outre soit un copolymère fluorure de vinylidène/hexafluoropropylène, soit un copolymère propylène/tétrafluoroéthylène, ou un terpolymère éthylène/propylène, la quantité d'un tel polymère supplémentaire, conjointement avec ledit copolymère séquencé (B), étant das les plages spécifiées pour le composant (B).

19. Composition selon l'une quelconque des revendications précédentes, contenant en outre un diluant non réactif, ayant une masse moléculaire inférieure à 20 000, choisi parmi des dérivés d'acide toluènesulfonique, des résines arylsulfonamide, des résines phénol-formaldéhyde de type Novolaque, le bisphénol S et ses dérivés, la 4,4'-dichlorodiphénylsulfone et ses dérivés, la 4,4'-diaminodiphénylsulfone et ses dérivés, des formes totalement saturées des agents de réticulation (C), et des résines rendant la composition collante, la quantité totale du diluant et du composant (C) étant dans les plages spécifiées pour (C).

20. Composition selon l'une quelconque des revendications précédentes, comprenant, en plus de l'agent de réticulation (C), un polyhydroxyéther, la quantité totale de (C) et polyhydroxyéther étant dans les plages spécifiées pour (C).

21. Composition selon l'une quelconque des revendications précédentes, dans laquelle l'agent de réticulation (C) a été mis en réaction avec le polymère aliphatique (B) pour donner une composition réticulée.

22. Composition selon la revendication 21, qui a été réticulée par exposition à un faisceau d'électrons, à une dose allant jusqu'à 50 Mrads.

23. Composition selon la revendication 21 ou 22, sous la forme d'un article qui a été déformé et qui est maintenu dans un état où il peut récupérer sa forme et ses dimensions à chaud.

24. Composition selon l'une quelconque des revendications précédentes, sous la forme d'un filament pouvant récupérer sa forme et ses dimensions à chaud.

Fig.1.

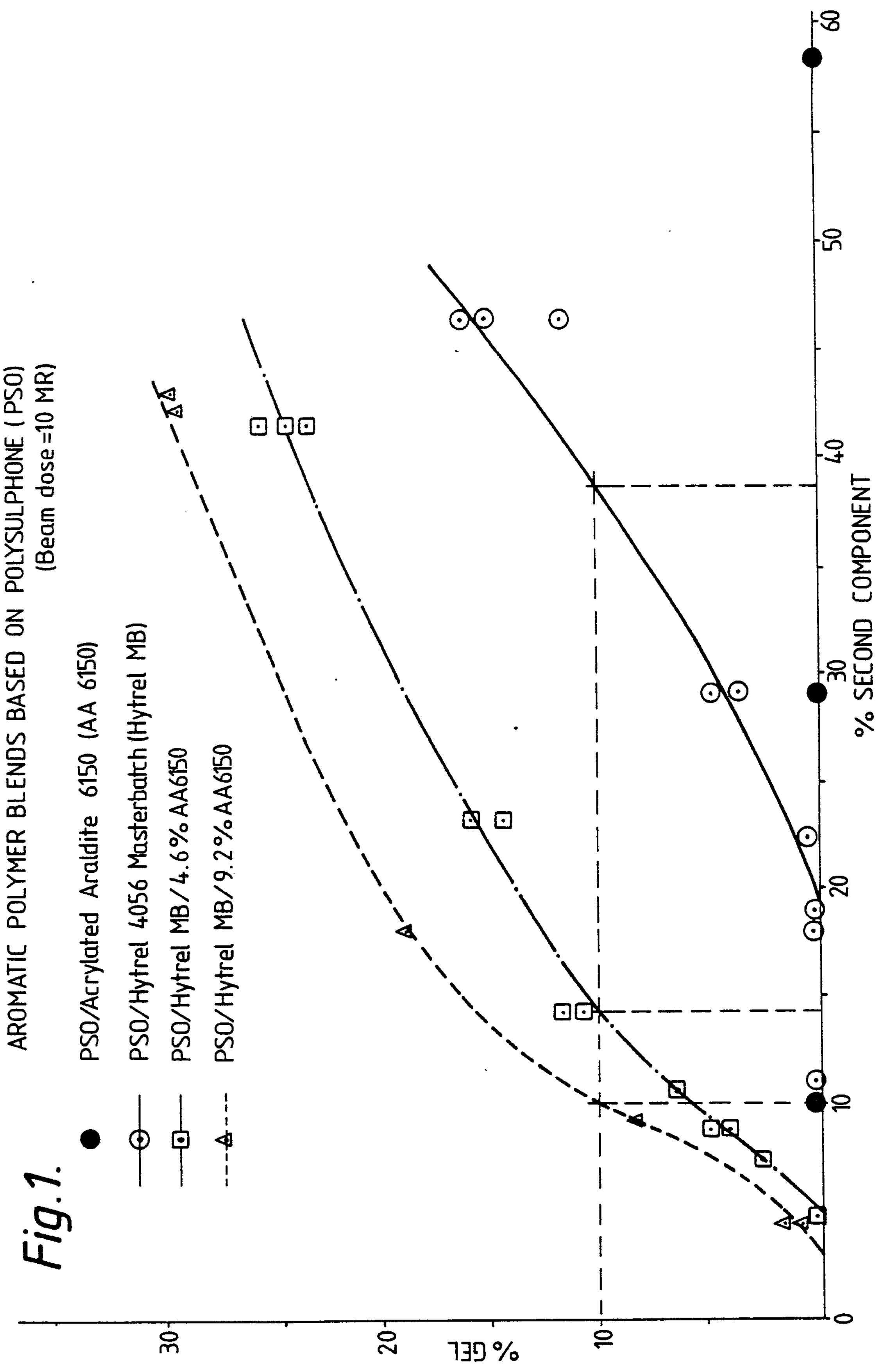
AROMATIC POLYMER BLENDS BASED ON POLYSULPHONE (PSO)
(Beam dose =10 MR)
PSO/Acrylated Araldite 6150 (AA 6150)
PSO/Hytrel 4056 Masterbatch (Hytrel MB)
PSO/Hytrel MB/4.6% AA6150
PSO/Hytrel MB/9.2% AA6150
% GEL
30
20
10
0
10
20
30
40
50
60
% SECOND COMPONENT

Fig. 2.

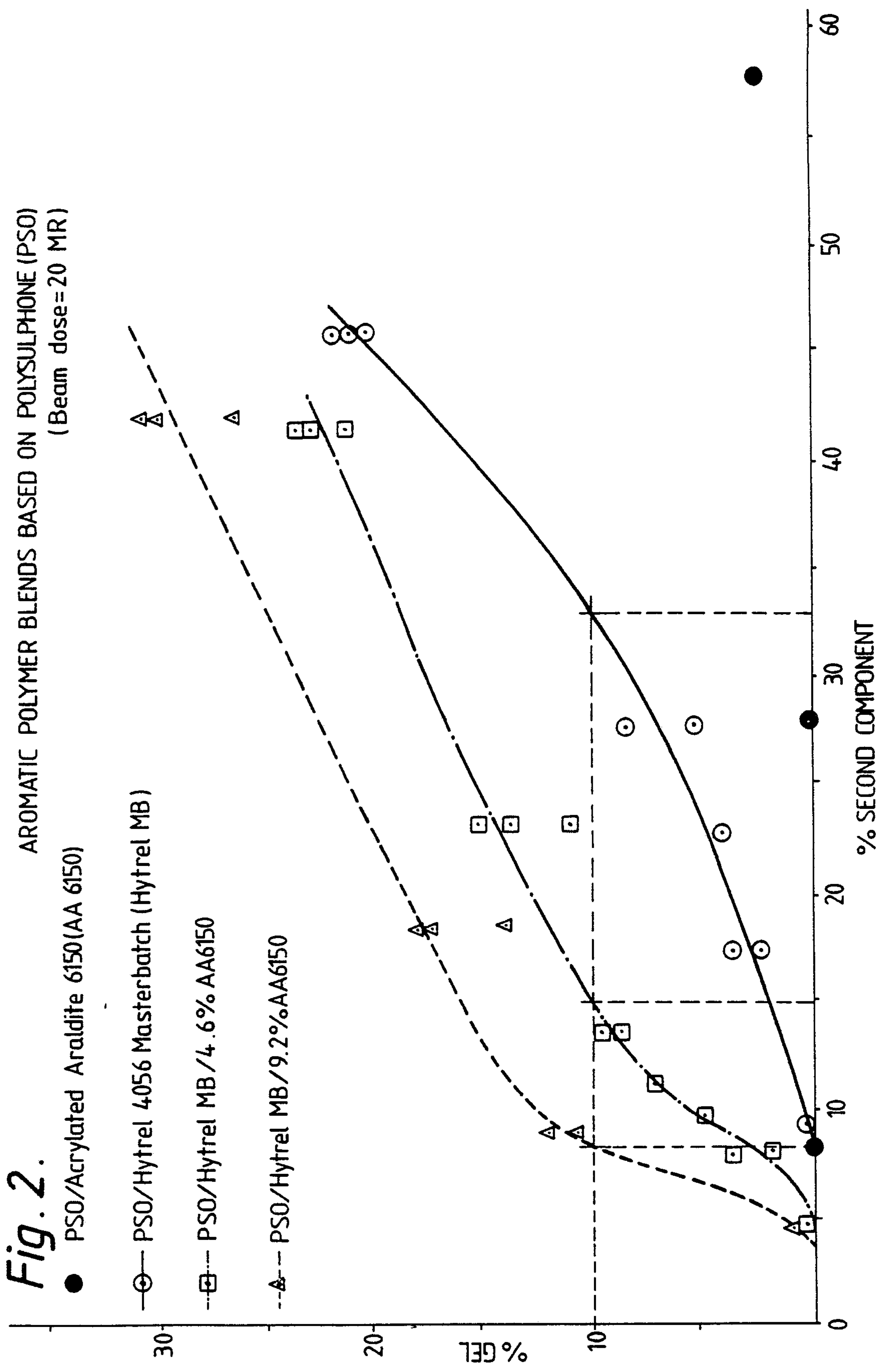
AROMATIC POLYMER BLENDS BASED ON POLYSULPHONE (PSO)
(Beam dose=20 MR)
PSO/Acrylated Araldite 6150 (AA 6150)
PSO/Hytrel 4056 Masterbatch (Hytrel MB)
PSO/Hytrel MB/4.6% AA6150
PSO/Hytrel MB/9.2% AA6150
% GEL
30
20
10
0
10
20
30
40
50
60
% SECOND COMPONENT

Fig. 3.

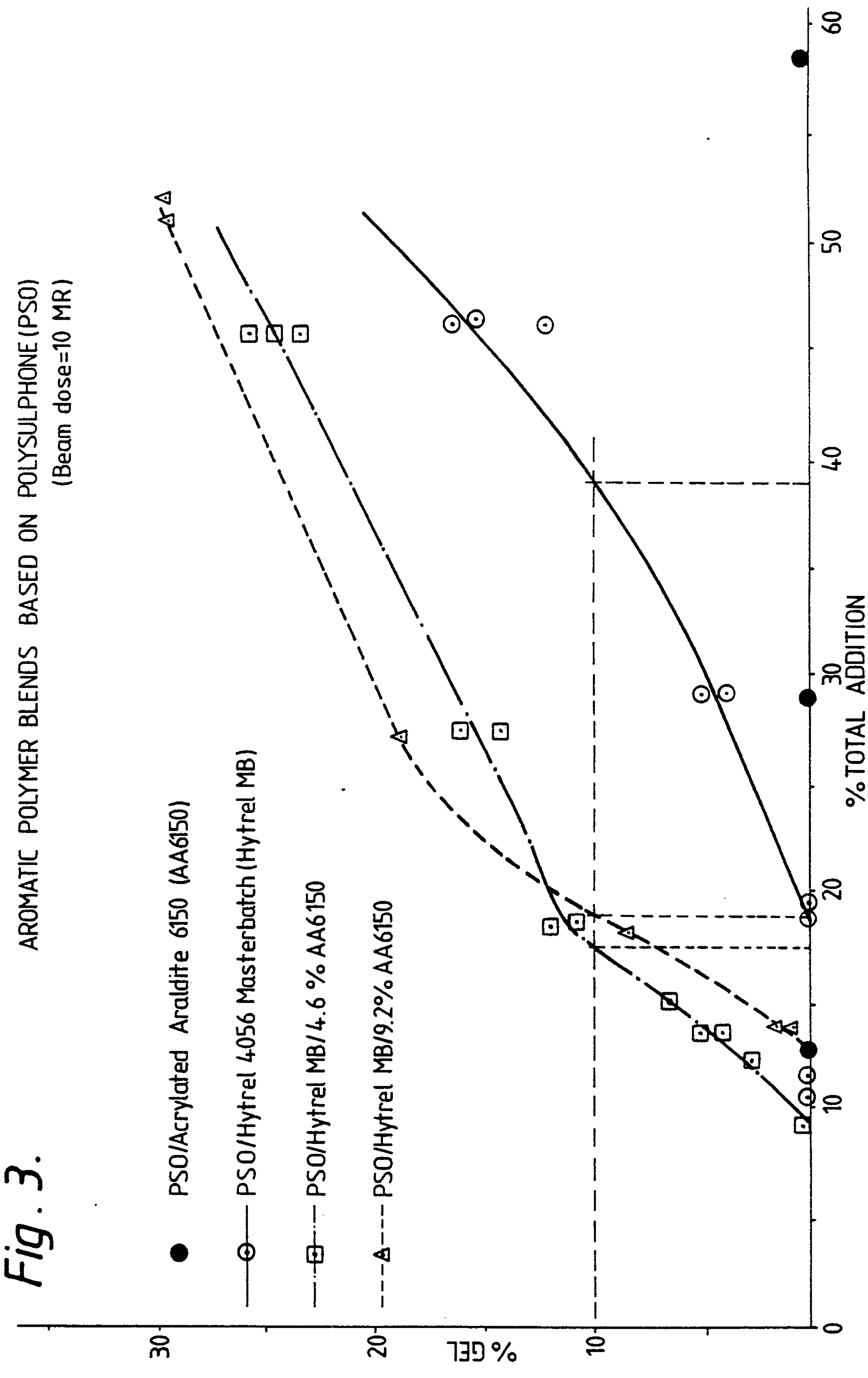
AROMATIC POLYMER BLENDS BASED ON POLYSULPHONE (PSO)
(Beam dose=10 MR)
PSO/Acrylated Araldite 6150 (AA6150)
PSO/Hytrel 4056 Masterbatch (Hytrel MB)
PSO/Hytrel MB/4.6 % AA6150
PSO/Hytrel MB/9.2% AA6150
% GEL
30
20
10
0
10
20
30
40
50
60
% TOTAL ADDITION

Fig. 4. CREEP CURVES OF RELAXED FILAMENTS

Testing Conditions: Temperature 60°C.
Stress 20 MPa

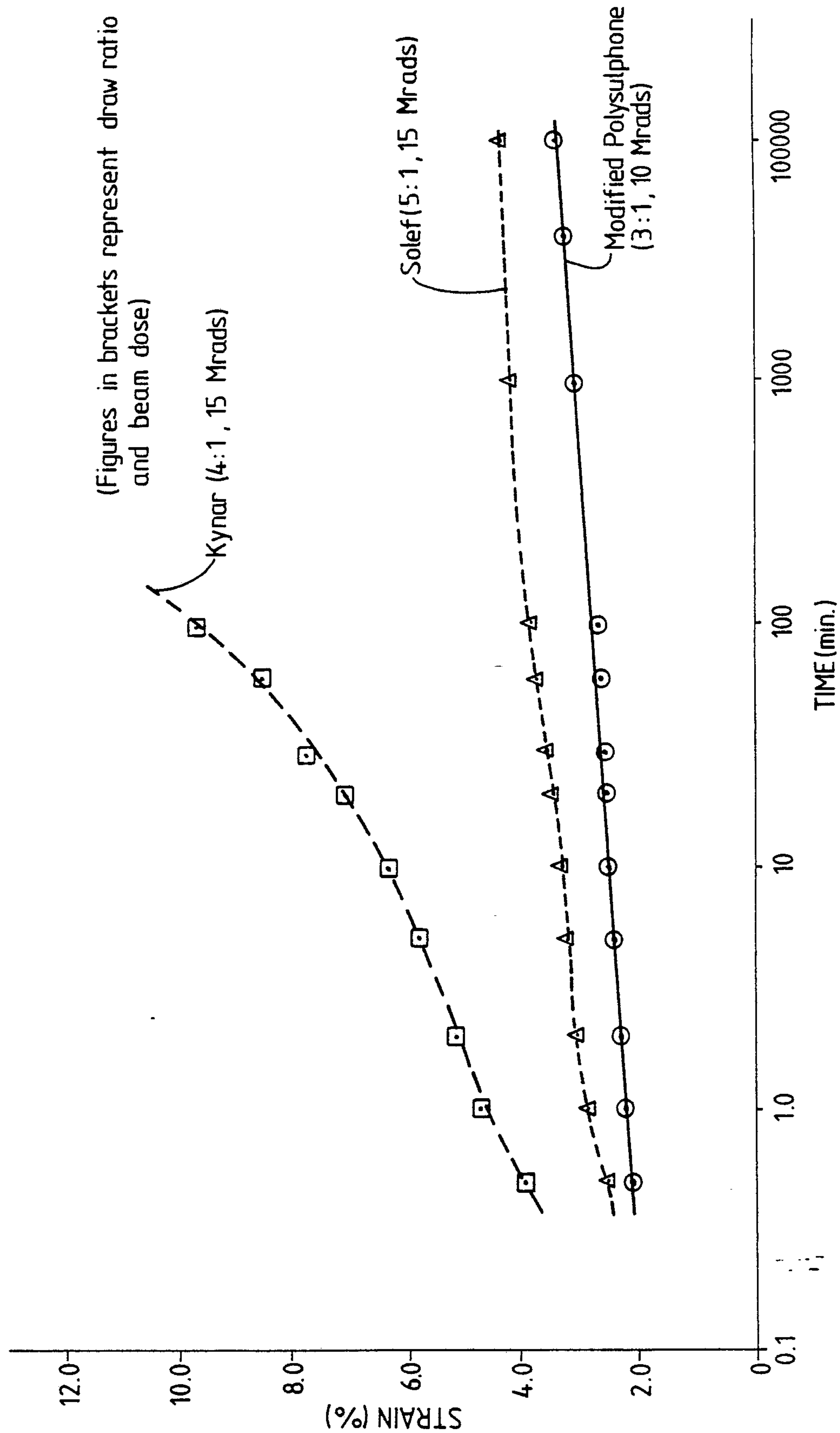

*Fig. 5.*

CREEP CURVES OF RECOVERED FILAMENTS

Testing Conditions: Temperature 60°C.
Stress 7MPa